(19) Europäisches Patentamt
European Patent Office
Office européen des brevets

(11) EP 4 561 213 A1

(12) EUROPEAN PATENT APPLICATION
published in accordance with Art. 153(4) EPC

(43) Date of publication:
**28.05.2025 Bulletin 2025/22**

(21) Application number: **22952503.5**

(22) Date of filing: **29.07.2022**

(51) International Patent Classification (IPC):
***H04W 72/00*** *(2023.01)*

(52) Cooperative Patent Classification (CPC):
**H04W 72/00**

(86) International application number:
**PCT/CN2022/109088**

(87) International publication number:
**WO 2024/021056 (01.02.2024 Gazette 2024/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **ZHAO, Zhenshan**
**Dongguan, Guangdong 523860 (CN)**

(74) Representative: **RGTH Patentanwälte PartGmbB**
**Neuer Wall 10**
**20354 Hamburg (DE)**

# (54) SIDELINK TRANSMISSION METHOD AND TERMINAL

(57) The present application relates to the field of communications, and in particular, to a sidelink transmission method and a terminal. The sidelink transmission method includes: obtaining, by a terminal, a mapping relationship between resource block (RB) sets and physical resource blocks (PRBs) in a guard band. In embodiments of the present application, the mapping relationship between the RB sets and the PRBs in the guard band is determined, so that the PRBs in the guard band may be used for sidelink transmission, which improves transmission efficiency.

1100

A terminal obtains a mapping relationship between sets of resource blocks (RBs) and physical resource blocks (PRBs) in a guard band. S1110

FIG. 11

EP 4 561 213 A1

## Description

## TECHNICAL FIELD

The present application relates to the field of communications, and in particular, to a sidelink transmission method and a terminal.

## BACKGROUND

In a sidelink over unlicensed spectrum (SL-U) system, a terminal needs to listen a channel before using sidelink transmission resources for data transmission. Sidelink transmission may only be performed in a case where the channel is idle. If the sidelink transmission resources of the terminal are continuous in a time domain, the terminal may continue to occupy the channel in the case of successfully listening the channel before a first time slot of the sidelink transmission resources. The SL-U system considers the support for a resource allocation manner based on continuous sidelink transmission resources.

## SUMMARY

Embodiments of the present application provide a sidelink transmission method, which includes:
obtaining, by a terminal, a mapping relationship between resource block (RB) sets and physical resource blocks (PRBs) in a guard band.

The embodiments of the present application provide a sidelink transmission method, which includes:
obtaining, by a terminal, a mapping relationship between frequency domain resources of a sidelink channel and sidelink transmission resources, the frequency domain resources of the sidelink channel including one or more IRBs.

The embodiments of the present application provide a sidelink transmission method, which includes:
obtaining, by a terminal, a transmission block size (TBS) of a sidelink channel, the TBS being determined according to a first number of PRBs and/or a second number of PRBs.

The embodiments of the present application provide a terminal, which includes:
a processing unit, used to obtain a mapping relationship between resource block (RB) sets and physical resource blocks (PRBs) in a guard band.

The embodiments of the present application provide a terminal, which includes:
a processing unit, used to obtain a mapping relationship between frequency domain resources of a sidelink channel and sidelink transmission resources, the frequency domain resources of the sidelink channel including one or more IRBs.

The embodiments of the present application provide a terminal, which includes:
a processing unit, used to obtain a transmission block size (TBS) of a sidelink channel, the TBS being determined according to a first number of PRBs and/or a second number of PRBs.

The embodiments of the present application provide a terminal, which includes a processor and a memory. The memory is used to store a computer program, and the processor is used to call and run the computer program stored in the memory to cause the terminal to perform the sidelink transmission method.

The embodiments of the present application provide a chip, which is used to implement the sidelink transmission method.

Specifically, the chip includes a processor, configured to call and run a computer program from a memory to cause a device on which the chip is mounted to perform the sidelink transmission method.

The embodiments of the present application provide a computer-readable storage medium, which is used to store a computer program. The computer program, when run by a device, causes the device to perform the sidelink transmission method.

The embodiments of the present application provide a computer program product, which includes computer program instructions. The computer program instructions cause a computer to perform the sidelink transmission method.

The embodiments of the present application provide a computer program, and the computer program, when run on a computer, causes the computer to perform the sidelink transmission method.

In the embodiments of the present application, the mapping relationship between the RB sets and the PRBs in the guard band is determined, so that the PRBs in the guard band may be used for sidelink transmission, which improves transmission efficiency.

## BRIEF DESCRIPTION OF THE DRAWINGS

FIG. 1 is a schematic diagram of sidelink communication within network coverage according to the embodiments of the present application.

FIG. 2 is a schematic diagram of sidelink communication with partial network coverage according to the embodiments of the present application.

FIG. 3 is a schematic diagram of sidelink communication outside network coverage according to the embodiments of the present application.

FIG. 4 is a schematic diagram of a central control node according to the embodiments of the present application.

FIG. 5 is a schematic diagram of unicast according to the embodiments of the present application.

FIG. 6 is a schematic diagram of multicast according to the embodiments of the present application.

FIG. 7 is a schematic diagram of broadcast according to the embodiments of the present application.

FIGS. 8A, 8B and 8C are schematic diagrams of time slot structures in NR-V2X according to the embodiments of the present application.

FIG. 9 is a schematic diagram of interlaced structure in an NR-U system according to the embodiments of the present application.

FIG. 10A is a schematic diagram of a resource pool configured on an unlicensed spectrum according to the embodiments of the present application.

FIG. 10B is a schematic diagram of an index of 0 for IRBs in a RB set 0.

FIG. 11 is a schematic flowchart of a sidelink transmission method according to an embodiment of the present application.

FIG. 12 is a schematic flowchart of a sidelink transmission method according to another embodiment of the present application.

FIG. 13 is a schematic flowchart of a sidelink transmission method according to yet another embodiment of the present application.

FIG. 14 is a schematic block diagram of a terminal according to an embodiment of the present application.

FIG. 15 is a schematic block diagram of a terminal according to an embodiment of the present application.

FIG. 16 is a schematic block diagram of a terminal according to an embodiment of the present application.

FIG. 17 is a schematic diagram of an example 1-1 according to the embodiments of the present application.

FIG. 18 is a schematic diagram of an example 1-2 according to the embodiments of the present application.

FIG. 19 is a schematic diagram of examples 2-1 and 2-8 according to the embodiments of the present application.

FIG. 20 is a schematic diagram of examples 2-2 and 2-3 according to the embodiments of the present application.

FIG. 21A is a schematic diagram of examples 2-4 and 2-5 according to the embodiments of the present application.

FIG. 21B is a schematic diagram of examples 2-6 and 2-9 according to the embodiments of the present application.

FIG. 22 is a schematic diagram of examples 2-7 and 2-10 according to the embodiments of the present application.

FIG. 23 is a schematic diagram of CRBs and IRBs included in one RB set according to the embodiments of the present application.

FIG. 24 is a schematic block diagram of a terminal device according to the embodiments of the present application.

FIG. 25 is a schematic block diagram of a chip according to the embodiments of the present application.

FIG. 26 is a schematic block diagram of a communication system according to the embodiments of the present application.

## DETAILED DESCRIPTION

Technical solutions in embodiments of the present application will be described below in conjunction with accompanying drawings of the embodiments of the present application.

The technical solutions of the embodiments of the present application may be applied to various communication systems, such as a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, or other communication systems.

Generally speaking, traditional communication systems support a limited number of connections, and are easy to implement. However, with the development of communication technology, mobile communication systems will support not only traditional communication, but also terminal to terminal direct communication such as device to device (D2D) communication, machine to machine (M2M) communication, machine type communication (MTC), vehicle to vehicle (V2V) communication, or vehicle to everything (V2X) communication. The embodiments of the present application may also be applied to these communication systems.

In an implementation, the communication system in the embodiments of the present application may be applied to a carrier aggregation (CA) scenario, a dual connectivity (DC) scenario, and a standalone (SA) networking scenario.

In an implementation, the communication system in the embodiments of the present application may be applied to an unlicensed spectrum. The unlicensed spectrum may also be considered as a shared spectrum. Alternatively, the communication system in the embodiments of the present application may also be applied to a licensed spectrum. The licensed spectrum may also be considered as an unshared spectrum.

The embodiments of the present application are described in conjunction with a network device and a terminal device. The terminal device may also be referred to as a user equipment (UE), an access terminal, a user unit, a user station, a mobile station, a mobile console, a remote station, a remote terminal, a mobile device, a user terminal, a terminal, a wireless communication device, a user agent, a user apparatus, or the like.

The terminal device may be a station (STor STA) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, a next-generation communication system such as a terminal device in an NR network, a terminal device in a future evolution of a public land mobile network (PLMN), or the like.

In the embodiments of the present application, the terminal device may be deployed on land, which includes indoor or outdoor, handheld, worn or vehicle-mounted device, deployed on water (e.g., on a ship) or under water (e.g., on a submarine), or deployed in the air (e.g., on an airplane, a balloon, and a satellite).

In the embodiments of the present application, the terminal device may be a mobile phone, a pad, a computer with a wireless transceiving function, a virtual reality (VR) terminal device, an augmented reality (AR) terminal device, a terminal device in a personal internet of things (PIoT), a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

By way of example but not limitation, in the embodiments of the present application, the terminal device may also be a wearable device. The wearable device, which may be also referred to as a wearable smart device, is a generic term for devices that are wearable and developed by applying wearable technologies to intelligently design daily wears, such as glasses, gloves, watches, clothing, and shoes, etc. The wearable device is a portable device that is worn directly on the body, or integrated into a user's clothing or accessories. The wearable device not only is a hardware device, but also achieves powerful functions through software support, data interaction and cloud interaction. In a broad sense, wearable smart devices include a fully-functioned, large-size device that can achieve all or partial functions without relying on a smartphone, e.g., a smartwatch or smart glasses, and a device that only focuses on a certain type of application function and needs to be used in conjunction with other devices such as a smartphone, e.g., various types of smart bracelets and smart jewelry for monitoring physical signs.

In the embodiments of the application, the network device may be a device used for communicating with a mobile device. The network device may be an access point (AP) in a WLAN, a base station such as a base transceiver station (BTS) in a GSM or a CDMA, a base station such as NodeB (NB) in a WCDMA, an evolutional base station such as an evolutional Node B (eNB or eNodeB) in an LTE, a relay station or an access point, a vehicle-mounted device, a wearable device, a network device such as a gNB in an NR network, a network device in a future ecolution of PLMN network, a network device in an NTN network, or the like.

By way of example but not limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station provided on land, water, and other positions.

In the embodiments of the present application, the network device may provide services for a cell, and the terminal device communicates with the network device through transmission resources (such as frequency domain resources, or frequency spectrum resources) used by the cell. The cell may be a cell corresponding to the network device (such as the base station). The cell may belong to a macro base station or a base station corresponding to a small cell. Small cells here may include a metro cell, a micro cell, a pico cell, a femto cell, etc. These small cells have characteristics of small coverage and low transmit power, and are applicable for providing high-speed data transmission services.

It should be understood that the terms "system" and "network" are often used interchangeably herein. Herein, the term "and/or" is only an association to describe associated objects, which means that there may be three kinds of relationships. For example, A and/or B may indicate three cases that: A exists alone, both A and B exist, and B exists alone. In addition, a character "/" herein generally means that related objects before and after "/" are in an "or" relationship.

It should be understood that "indication" mentioned in the embodiments of the present application may mean a direct indication, or an indirect indication, or may imply an association. For example, A indicates B, which may mean that A directly indicates B (for example, B may be obtained by A) or may mean that A indirectly indicates B (for example, A indicates C, and B may be obtained by C), or may mean that there is an association between A and B.

In the description of the embodiments of the present application, the term "corresponding" may mean that there is a direct or indirect correspondence between two, or an association between the two, or may mean a relationship of indicating and being indicated or a relationship of configuring and being configured, etc.

To facilitate the understanding of the technical solutions in the embodiments of the present application, the related technologies of the embodiments of the present application will be described below. The below related technologies, as optional solutions, may be arbitrarily combined with the technical solutions of the embodiments of the present application, which all fall within the protection scope of the embodiments of the present application.

Sidelink communications for different network coverage environments:

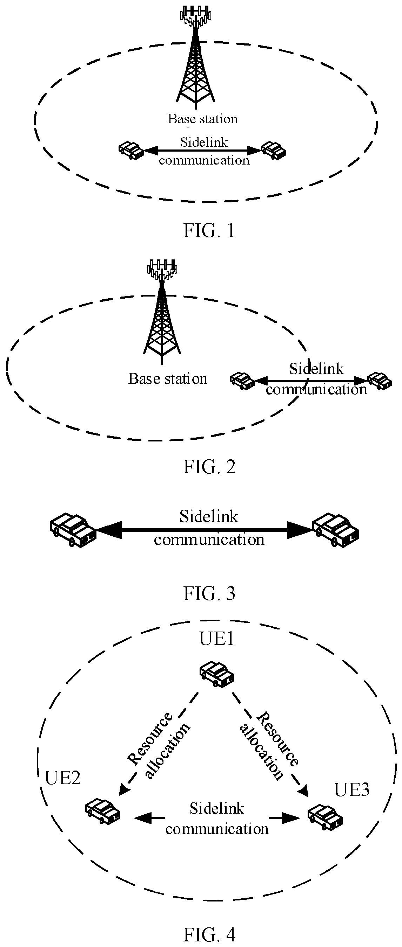

Sidelink communications, according to network coverage situations in which terminals for communications are located, may be divided into a sidelink communication within network coverage, a sidelink communication within partial network coverage, and a sidelink communication outside network coverage, as shown in FIGS. 1, 2, 3 and 4 respectively.

In FIG. 1, in the sidelink communication within the network coverage, all terminals for the sidelink communication are within coverage of the same base station. Thus, the above terminals may perform the sidelink communication based on the same sidelink configuration by receiving configuration signaling from the base station.

In FIG. 2, in the case of the sidelink communication within the partial network coverage, a part of terminals for the sidelink communication are located within coverage of the base station. The part of terminals may receive configuration signaling from the base station and perform the sidelink communication according to the configuration of the base station. Terminals outside the network coverage may not receive configuration signaling from the base station. In this case, the terminal outside the network coverage will determine the sidelink configuration and perform the sidelink communication according to pre-configuration information and information carried by a physical sidelink broadcast channel (PSBCH) transmitted by the terminal within the network coverage.

In FIG. 3, for the sidelink communication outside the network coverage, all terminals for the sidelink communication are located outside the network coverage, and all terminals determine the sidelink configuration according to pre-configuration information to perform the sidelink communication.

In FIG. 4, for the sidelink communication with a central control node, a plurality of terminals form a communication group, and the communication group has a central control node therein, also known as a cluster header (CH). The central control node has at least one of the following functions: responsible for establishing a communication group; joining and leaving of group members; coordinating resources, allocating sidelink transmission resources to other terminals, receiving sidelink feedback information from other terminals, or coordinating resources with other communication groups.

D2D/V2X:

Device to device (D2D) communication is a sidelink (SL) transmission technology that uses a terminal to terminal direct communication manner. The manner is different from a manner in which communication data is received or transmitted by base stations in traditional cellular systems, and thus has higher spectrum efficiency and lower transmission latency. Two transmission modes are defined in 3GPP: a first mode and a second mode.

In the first mode, the transmission resources of the terminal are allocated by the base station, and the terminal transmits data on the sidelink according to the resources allocated by the base station. The base station may dynamically allocate sidelink transmission resources to the terminal, or may allocate semi-static transmission resources to the terminal. As shown in FIG. 1, the terminals are located within the network coverage, and the network allocates transmission resources for the sidelink transmission to the terminals.

In the second mode, the terminal selects one resource in a resource pool to transmit data. As shown in FIG. 3, the terminal is located outside cell coverage, and the terminal autonomously selects transmission resources from a pre-configured resource pool for sidelink transmission. Alternatively, as shown in FIG. 1, the terminal autonomously selects transmission resources from a resource pool configured by the network for sidelink transmission.

NR-V2X:

In NR-V2X, autonomous driving needs to be supported, which thus puts forward higher requirements on data interaction between vehicles, such as higher throughput, lower latency, higher reliability, larger coverage, more flexible resource allocation.

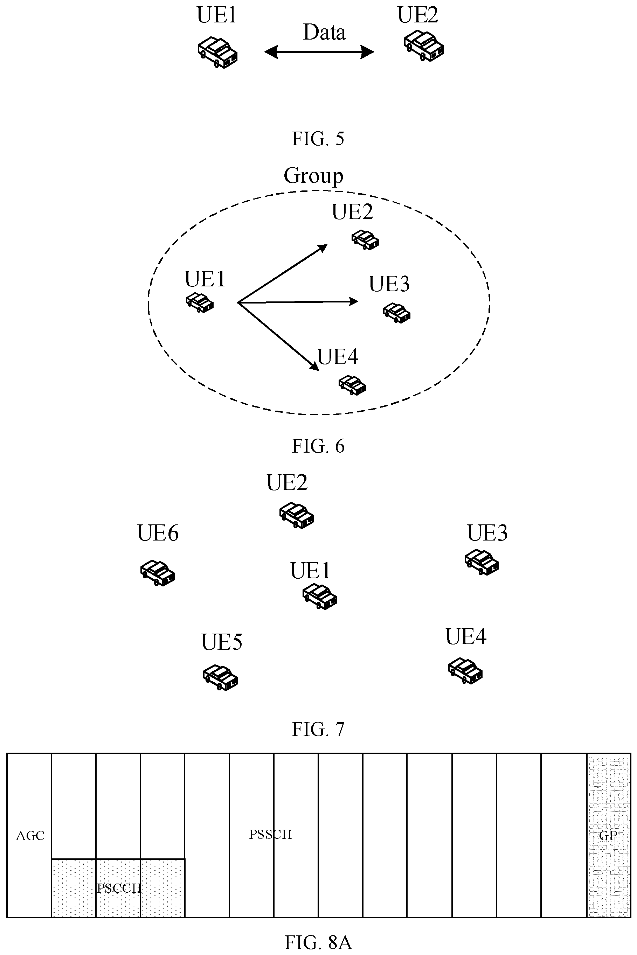

Unicast, multicast and broadcast transmission manners are introduced in NR-V2X. A receiving terminal of unicast transmission is only one terminal. As shown in FIG. 5, the unicast transmission is performed between UE1 and UE2. Receiving terminals of the multicast transmission are all terminals in one communication group, or all terminals within a certain transmission distance. As shown in FIG. 6, UE1, UE2, UE3 and UE4 form one communication group, in which UE1 transmits data, and other terminal devices in the group are receiving terminals. A receiving terminal of the broadcast transmission manner is any terminal around the transmitting terminal. For example, in FIG. 7, the UE1 is a transmitting terminal, and other terminals around it, UE2 to UE6, are all receiving terminals.

NR-V2X system frame structure:

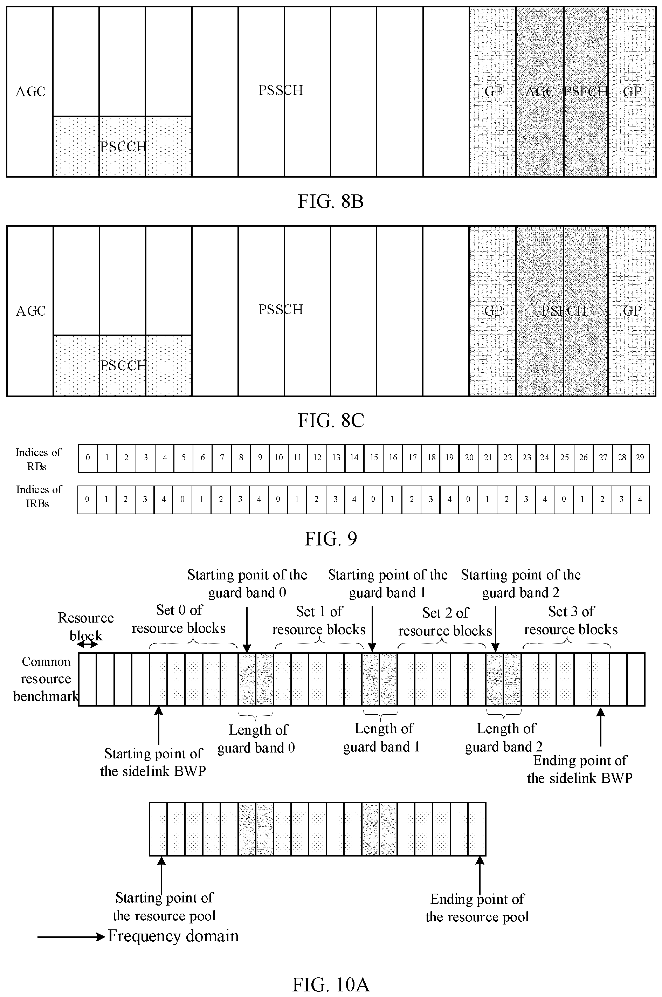

Time slot structures in NR-V2X are shown in FIGS. 8A and 8B. FIG. 8A shows a time slot structure of a time slot without a physical sidelink feedback channel (PSFCH). FIG. 8B shows a time slot structure of a time slot with the PSFCH.

A pysical sidelink control channel (PSCCH) in NR-V2X starts from a second sidelink symbol of the time slot in the time domain, occupies 2 or 3 orthogonal frequency division multiplexing (OFDM) symbols, and may occupy {10, 12 15, 20, 25} physical resource blocks (PRBs) in the frequency domain. In order to reduce complexity of blind detection of PSCCH by UE, only one PSCCH symbol and the number of PRBs are allowed to be configured in one resource pool. In addition, sub-channel is the minimum granularity of physical sidelink shared channel (PSSCH) resource allocation in the NR-V2X. The number of PRBs occupied by the PSCCH must be less than or equal to the number of PRBs contained in a sub-channel in the resource pool, so as to avoid additional restrictions on PSSCH resource selection or allocation. The PSSCH also starts from the second sidelink symbol of the time slot in the time domain. A last time domain symbol of the time slot is a guard period (GP) symbol, and remaining symbols map the PSSCH. A first sidelink symbol of the time slot is a repetition of the second sidelink symbol. Usually, the receiving terminal uses the first sidelink symbol as an automatic gain control (AGC) symbol, and data on this symbol is usually not used for data demodulation. The PSSCH occupies K sub-channels in the frequency domain, and each sub-channel includes A continuous PRBs, as shown in FIG. 8A.

In a case where the time slot contains the PSFCH, a second-to-last symbol of the time slot is used for PSFCH channel transmission, a third-to-last symbol may be used as AGC, and a time domain symbol before the PSFCH channel is used as a GP symbol, as shown in FIG. 8B.

In a case where the time slot contains the PSFCH, a second-to-last symbol and a third-to-last symbol of the time slot are used for PSFCH channel transmission, and a time domain symbol before the PSFCH channel is used as a GP symbol, as shown in FIG. 8C.

Unlicensed spectrum:

Unlicensed spectrum is a spectrum allocated by countries and regions that may be used for radio device communications. This spectrum is generally considered to be a shared spectrum. That is, as long as communication devices in different communication systems meet regulatory requirements set by countries or regions on the spectrum, they may use the spectrum without applying for exclusive spectrum authorization from the government.

In order to enable various communication systems that use the unlicensed spectrum for wireless communication to coexist in a friendly manner on the spectrum, some countries or regions have stipulated regulatory requirements that must be met for the use of unlicensed spectrum. For example, the communication device follows the "listen before talk (LBT)" principle. That is, before transmitting a signal on a channel of the unlicensed spectrum, the communication device needs to first listen the channel. The communication device may transmit a signal only in a case where a channel listening result is that the channel is idle. If the channel listening result of the communication device on the channel of the unlicensed spectrum is that the channel is busy, the communication device may not transmit a signal. To ensure fairness, during one transmission, duration that a communication device uses the channel of the unlicensed spectrum for signal transmission may not exceed the maximum channel occupancy time (MCOT).

Interlace structure

For NR-based access to unlicensed spectrum (NR-U), communications in unlicensed frequency bands usually need to meet corresponding regulatory requirements. For example, if a terminal intends to use an unlicensed frequency band for communication, the frequency band occupied by the terminal needs to be greater than or equal to 80% of the system bandwidth. Therefore, in order to allow as many users as possible to access the channel in the same time, an interlace-based resource configuration manner is defined in NR-U. An interlace resource includes N PRBs that are discrete in the frequency domain. The frequency band includes a total of M interlaced resources. The m-th interlace includes PRBs {m, M+m, 2M+m, 3M+m, ...}. As shown in FIG. 9, the system bandwidth includes 30 RBs, including 5 interlaces (i.e., M=5). Each interlace includes 6 PRBs (i.e., N=6). Frequency domain intervals of two adjacent PRBs in one interlace is the same, i.e., 5 PRBs apart. It should be noted that the PRBs included in one interlace may also be called interlaced resource blocks (IRBs). It should be noted that in the embodiments of the present application, the interlace and the IRB may indicate the same meaning or may be interchanged. An interlace index and an IRB index may indicate the same meaning or may be interchanged. An IRB index B indicates a group of IRBs with the same index B.

Resource block sets

FIG. 10A is an example of a resource pool configured on an unlicensed spectrum provided by the embodiments of the present application. In an SL-U system, a resource pool is configured on an unlicensed spectrum or a shared spectrum for sidelink transmission through pre-configuration information or network configuration information. In some implementations, the resource pool includes M1 resource block (RB) sets. One resource block set includes M2 resource blocks (RBs), and M1 and M2 are positive integers. In some embodiments, one resource block set corresponds to one channel in the unlicensed spectrum (or the shared spectrum), or one resource block set corresponds to a minimum frequency domain granularity for LBT, or one resource block set corresponds to an LBT sub-band.

For example, a bandwidth corresponding to one channel on the unlicensed spectrum is 20 MHz, that is, a bandwidth corresponding to one resource block set is also 20 MHz. Alternatively, a bandwidth of one channel on the unlicensed spectrum is 20 MHz, corresponding to M3 RBs. The M3 RBs are all RBs included in one channel, or all RBs in one channel that may be used for data transmission. If M3=100 (corresponding to 15 kHz sub-carrier spacing), one RB set also corresponds to 100 RBs, that is, M2=100.

For another example, whether the unlicensed spectrum may be used needs to be determined according to a result of LBT. The minimum frequency domain granularity for LBT is 20 MHz, and one RB set corresponds to the number of RBs included in 20 MHz. Alternatively, one RB set includes M2=100 RBs (corresponding to 15 kHz sub-carrier spacing), and the minimum frequency domain granularity of LBT is one RB set, i.e., 100 RBs.

It should be noted that in the embodiments of the present application, the resource block set may also be referred to as a channel or an LBT sub-band, which is not limited in the embodiments of the present application.

In some implementations, a frequency domain starting position of the resource pool is the same as a frequency domain starting position of a first resource block set in the M1 resource block sets. The first resource block set is a resource block set with the lowest frequency domain position in the M1 resource block sets.

In some implementations, a frequency domain ending position of the resource pool is the same as a frequency domain ending position of a second resource block set in the M1 resource block sets. The second resource block set is a resource block set with the highest frequency domain position in the M1 resource block sets.

For example, the resource pool includes M1=3 resource block sets, and indices of the corresponding resource block sets are a resource block set 0, a resource block set 1 and a resource block set 2. A frequency domain position of the resource block set 0 is the lowest, and a frequency domain position of the resource block set 2 is the highest. Therefore, a frequency domain starting position of the resource pool is the same as a frequency domain starting position of the resource block set 0, or the frequency domain starting position of the resource pool is determined according to the frequency domain starting position of the resource block set 0. A frequency domain ending position of the resource pool is the same as a frequency domain ending position of the resource block set 2, or the frequency domain ending position of the resource pool is determined according to the frequency domain ending position of the resource block set 2.

In some implementations, a guard band (GB) is privided between two adjacent resource block sets in the M1 resource block sets included in the resource pool. The guard band may also be called a guard frequency band.

In some implementations, a frequency domain starting position and a frequency domain size of the guard band are determined according to pre-configuration information or network configuration information. The terminal obtains the pre-configuration information or the network configuration information. The pre-configuration information or the network configuration information is used for configuring the guard band (GB). In some implementations, guard bands are used to separate resource block sets (RB sets).

For example, as shown in FIG. 10A, three guard bands are configured in the sidelink bandwidth part (BWP), corresponding to guard band 0, guard band 1 and guard band 2, respectively. The three guard bands separate 4 resource block sets. A frequency domain starting position and a frequency domain ending position of each resource block set may be determined according to a frequency domain starting position of the sidelink BWP (i.e., the starting point of the sidelink BWP shown in FIG. 10A), a frequency domain starting position of each guard band (i.e., the starting point of the guard band shown in FIG. 10A), and a frequency domain size of the guard band (i.e., the length of the guard band shown in FIG. 10A). A sidelink resource pool is configured in the sidelink BWP, and the sidelink resource pool includes 3 resource block sets, that is, a resource block set 0 to a set 2 of resource blocks. Therefore, the frequency domain starting position of the resource pool (i.e., the starting point of the resource pool shown in FIG. 10A) corresponds to the frequency domain starting position of the resource block set 0, and the frequency domain ending position of the resource pool (i.e., the ending point of the resource pool shown in FIG. 10A) corresponds to the frequency domain ending position of the set 2 of resource blocks.

In some implementations, one resource block set includes a plurality of interlaces. For example, each resource block set in FIG. 10A may include a plurality of interlaces.

In some implementations, one PSCCH may be transmitted in one or more resource block sets. In yet further implementations, one PSCCH may be transmitted in one or more resource block sets, and the PSCCH occupies one or more interlaces in the one or more resource block sets.

In some implementations, one PSSCH may be transmitted in one or more resource block sets. In yet further implementations, one PSSCH may be transmitted in one or more resource block sets, and the PSSCH occupies one or more interlaces in the one or more resource block sets.

In the NR-U system, the number of interlaces included in one carrier is only related to the sub-carrier spacing, as shown in the following table:

Table 1: Correspondence between the number of interlaces and sub-carrier spacing

| $\mu$ | Sub-carrier spacing $\Delta f = 2^{\mu} \cdot 15$ [kHz] | Number of interlaces |
|---|---|---|
| 0 | 15 | 10 |
| 1 | 30 | 5 |

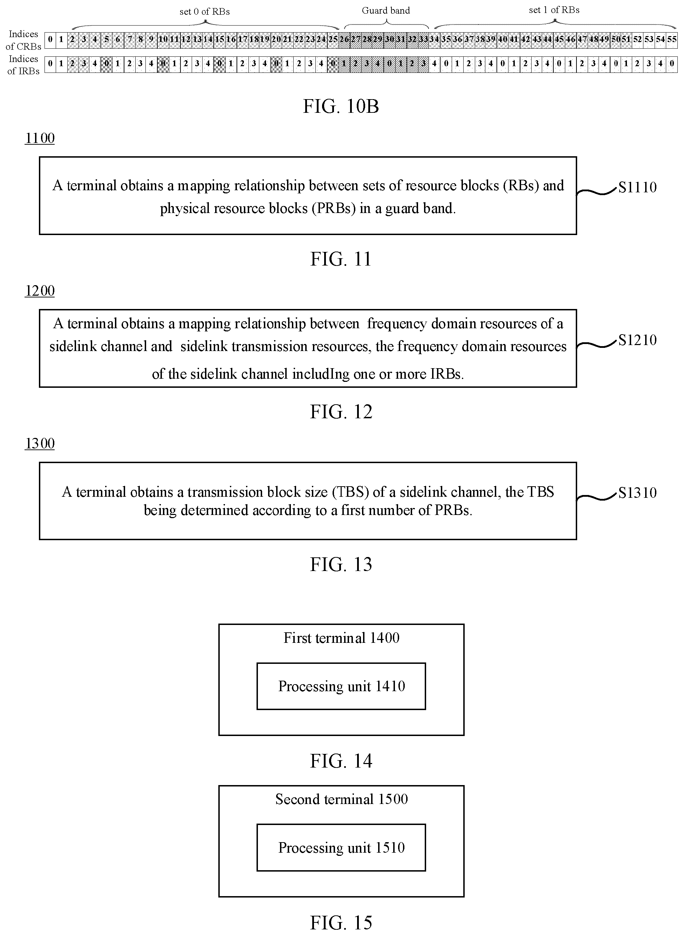

The interlaced resources map starting from a first common resource block (CRB) of the carrier, as shown in FIG. 10B. The uplink BWP corresponds to two RB sets, including CRBs from CRB #2 to CRB #55. A guard band is configured between the two RB sets, including 8 CRBs. The mapping of IRB to CRB starts from CRB #0, and the sub-carrier spacing is 30 kHz. According to Table 1, the total number of interlaces included in the system is 5, and the mapping relationship between IRB and CRB is shown in FIG. 10B. In a case where the network allocates uplink transmission resources to the terminal, it indicates the allocated RB set and the IRB information in the RB set. For example, in a case where the network allocates IRB 0 in the RB set 0 to the terminal, the resources corresponding to the terminal are shown in the five boxes in FIG. 10B in which indices of IRBs are 0 in the RB set 0.

In a case where the sidelink transmission system operates in the unlicensed spectrum (also known as the SL-U system), it needs to support the interlace structure. In the resource allocation or resource indication of the SL-U system, frequency domain resources are allocated based on the granularity of sub-channels. For the SL-U system based on the interlace structure, one sub-channel includes one or more IRBs. In a case where one resource pool includes multiple RB sets and a guard band (GB) is configured between the RB sets, the following issues need to be addressed:

a correspondence between the PRBs in the guard band and the IRBs (or sub-channels) in two RB sets adjacent to the guard band;
a resource mapping relationship between PSCCH/PSSCH/PSFCH/S-SSB and PRBs in the guard band; and
a method for determining a transmission block size (TBS) of the PSSCH.

FIG. 11 is a schematic flowchart of a sidelink transmission method 1100 according to an embodiment of the present application. The method may optionally be applied to the systems shown in FIG.S 1 to 7, which is not limited thereto. The method includes at least part of the following.

In S1110, a terminal obtains a mapping relationship between resource block (RB) sets and physical resource blocks (PRBs) in a guard band.

In the embodiments of the present application, the terminal may be a transmitting terminal of a sidelink communication system or a receiving terminal of the sidelink communication system. The terminal may automatically determine the mapping relationship (or correspondence) between the RB sets and the PRBs in the guard band, or receive the mapping relationship between the RB sets and the PRBs in the guard band from other devices. The other devices may include network devices or other terminal devices. The guard band may be located between two RB sets. The guard band may include one or more PRBs. RB sets to which the PRBs in the guard band belong may be determined according to the mapping relationship between the RB sets and the PRBs in the guard band. The PRBs in the guard band may have corresponding IRBs, or there may be a correspondence between the PRBs in the guard band and the IRBs. If PRBs in a certain guard band belong to a certain RB set, IRBs corresponding to the PRBs also belong to the RB sets. Frequency domain resources occupied by the sidelink channel may be indicated by indicating information of a RB set where the frequency domain resources of the sidelink channel are located and/or IRB information within the RB set, or by indicating sub-channel information corresponding to the frequency domain resources of the sidelink channel.

In the embodiments of the present application, PRBs and commen resource blocks (CRBs) may have the same meaning or a correspondence, and may be interchangeable. Alternatively, indices of the PRBs have a correspondence with indices of the CRBs.

In an implementation, the guard band exists between a first RB set and a second RB set.

For example, a value of an index of a last PRB in the first RB set plus 1 may be equal to an index of a first PRB in the guard band. A value of an index of a last PRB in the guard band plus 1 may be equal to an index of a first PRB in the second RB set. The guard band is used to separate the first RB set and the second RB set.

In an implementation, the guard band includes A PRBs. X PRBs in the guard band belong to the first RB set, and Y PRBs in the guard band belong to the second RB set;

where, X is greater than or equal to 0 and is less than or equal to A ($0 \leq X \leq A$), Y is greater than or equal to 0 and is less than or equal to A (0≤Y≤A), and X, Y and A are positive integers.

In the embodiments of the present application, the X PRBs in the guard band that belong to the first RB set may be understood as the X PRBs having a correspondence or a belonging relationship with the first RB set. In some cases, the X PRBs and the PRBs in the first RB set may be used as one set. The Y PRBs in the guard band that belong to the second RB set may be understood as the Y PRBs having a correspondence or a belonging relationship with the second RB set. In some cases, the Y PRBs and the PRBs in the second RB set may be used as one set. Of course, the A PRBs in the guard band may belong to neither the first RB set nor the second RB set.

In an implementation, a value of the number X of PRBs belonging to the first RB set may indicate at least one of:

X=0, indicating that all PRBs in the guard band do not belong to the first RB set;
X=A, indicating that all PRBs in the guard band belong to the first RB set; or
0<X<A, indicating that a part of the PRBs in the guard band belong to the first RB set.

In an implementation, a value of the number Y of PRBs belonging to the second RB set may indicate at least one of:

Y=0, indicating that all PRBs in the guard band do not belong to the second RB set;
Y=A, indicating that all PRBs in the guard band belong to the second RB set; or
0<Y<A, indicating that a part of the PRBs in the guard band belong to the second RB set.

In an implementation, a sum of X and Y is equal to A (X+Y=A).

In an implementation, if X=0, Y=A, which indicats that all PRBs in the guard band belong to the second RB set. If X=A, Y=0, which indicats that all PRBs in the guard band do not belong to the second RB set. If 0<X<A, 0<Y<A, which indicats that a part of the PRBs in the guard band belong to the first RB set and a part of the PRBs in the guard band belong to the second RB set.

In an implementation, X and/or Y are determined according to configuration information. The configuration information may be included in resource pool configuration information or SL bandwidth part (SL BWP) configuration information.

In an implementation, the configuration information is pre-configuration information or network configuration information.

In an implementation, X and/or Y are determined according to protocol predefined information.

In an implementation, indices of the PRBs in the guard band have a correspondence with indices of the IRBs.

In an implementation, the X PRBs in the guard band that belong to the first RB set include X PRBs in the guard band that are in an order of indices of the PRBs from low to high.

For example, indices of the PRBs corresponding to the PRBs in the guard band are {20, 21, 22, 23, 24, 25}, and 3 PRBs with indices of PRBs {20, 21, 22} from low to high belong to the first RB set.

In an implementation, the Y PRBs in the guard band that belong to the second RB set include Y PRBs in the guard band that are in an order of the indices of the PRBs from high to low.

In an implementation, the Y PRBs in the guard band that belong to the second RB set include PRBs in the guard band except the X PRBs that belong to the first RB set.

For example, indices of the PRBs corresponding to the PRBs in the guard band are {20, 21, 22, 23, 24, 25}, X=3, and in the order of the indices of the PRBs from high to low, 3 PRBs with indices of PRBs {25, 24, 23} belong to the second RB set.

In an implementation, the X PRBs in the guard band that belong to the first RB set include X PRBs in the guard band that correspond to IRBs that are in an order of the indices of the IRBs from low to high.

For example, indices of the PRBs corresponding to the PRBs in the guard band are {20, 21, 22, 23, 24, 25}, and indices of IRBs corresponding to the PRBs in the guard band are {0, 1, 0, 1, 0, 1}, and X=3. In the order of the indices of the IRBs from low to high, 3 PRBs with indices of PRBs {20, 22, 24} corresponding to IRBs with index 0 of the IRBs belong to the first RB set.

In an implementation, the X PRBs in the guard band that belong to the first RB set are determined in the order of the indices of the IRBs from low to high and then the order of the indices of the PRBs from low to high.

For example, indices of the PRBs corresponding to the PRBs in the guard band are {20, 21, 22, 23, 24, 25}, indices of IRBs corresponding to the PRBs in the guard band are {0, 1, 2, 0, 1, 2}, and X=3. In the order of the indices of the IRBs from low to high and then the order of the indices of the PRBs from low to high are used, that is, according to the indices of the IRBs and then the order of the indices of the PRBs from low to high are used, the index 0 of the IRBs corresponds to 2 PRBs (corresponding indices of PRBs being 20 and 23 respectively) belonging to the first RB set. Next, the index 1 of the IRBs corresponds to 2 PRBs (corresponding indices of PRB being 21 and 24 respectively), it is determined that the PRB corresponding to the index 21 of the PRBs belongs to the first RB set in the order of the indices of the PRBs from low to high.

That is, 3 PRBs with indices of IRBs {20, 21, 23} belong to the first RB set.

In an implementation, the Y PRBs in the guard band that belong to the second RB set include Y PRBs in the guard band that are included in IRBs that are in an order of the indices of the IRBs from high to low.

For example, indices of PRBs in the guard band are {20, 21, 22, 23, 24, 25}, X=3, and indices of IRBs in the guard band are {0, 1, 0, 1, 0, 1}. 3 PRBs with indices of PRBs {21, 23, 25} corresponding to the IRBs with index 1 of the IRBs belong to the second RB set.

In an implementation, the Y PRBs in the guard band that belong to the second RB set are determined in the order of the indices of the IRBs from high to low and then the order of the indices of the PRBs from high to low.

For example, indices of PRBs corresponding to the PRBs in the guard band are {20, 21, 22, 23, 24, 25}, indices of IRBs corresponding to the PRBs in the guard band are {0, 1, 2, 0, 1, 2}, and X=3. In the order of the indices of the IRBs from high to low and then the order of the indices of the PRBs from high to low, index 2 of the IRBs corresponds to 2 PRBs (corresponding indices of PRBs are 22 and 25 respectively), and the 2 PRBs belong to the second RB set. Next, according to index 1 of the IRBs corresponding to 2 PRBs (corresponding indices of PRBs are 21 and 24 respectively) and the order of the indices of the PRBs from high to low, it is determined that the PRBs corresponds to index 24 of the PRBs belong to the second RB set. That is, 3 PRBs with indices of PRBs {22, 24, 25} belong to the second RB set.

In the embodiments of the present application, the mapping relationship between the RB sets and the PRBs in the guard band is determined, so that the PRBs in the guard band may be used for sidelink transmission, which improves transmission efficiency.

FIG. 12 is a schematic flowchart of a sidelink transmission method 1200 according to an embodiment of the present application. The method may optionally be applied to the systems shown in FIGS. 1 to 7, which is not limited thereto. The method includes at least part of the following.

In S1210, a terminal obtains a mapping relationship between frequency domain resources of a sidelink channel and sidelink transmission resources. The frequency domain resources of the sidelink channel include one or more IRBs.

The embodiment may be combined with any sidelink transmission method of the above embodiments. For example, step S1110 may be performed first, and after the terminal obtains the mapping relationship between the RB sets and the PRBs in the guard band, step S1210 may be performed to obtain the mapping relationship between the frequency domain resources of the sidelink channel and the sidelink transmission resources.

In the embodiments of the present application, the frequency domain resources of the sidelink channel may include one or more IRBs. If granularity of the frequency domain resources of the sidelink channel may be a sub-channel, one sub-channel may include one or more IRBs. The frequency domain resources of the sidelink channel may be located in one RB set or in multiple RB sets. The sidelink transmission resources may include PRBs in one or more RB sets, and the terminal may obtain the mapping relationship between the IRBs and the PRBs.

In the embodiments of the present application, the terminal may be a transmitting terminal of a sidelink communication system or a receiving terminal of the sidelink communication system. The terminal may autonomously determine the mapping relationship between the frequency domain resources of the sidelink channel and the sidelink transmission resources, or receive the mapping relationship between the frequency domain resources of the sidelink channel and the sidelink transmission resources from other devices. The other devices may include network devices or other terminal devices.

In an implementation, in a case where the frequency domain resources of the sidelink channel are not located in multiple RB sets, the PRBs corresponding to the frequency domain resources of the sidelink channel are located in one RB set. The PRBs corresponding to the frequency domain resources of the sidelink channel are included in PRBs corresponding to the one or more IRBs included in the frequency domain resources of the sidelink channel.

For example, the frequency domain resources of the sidelink channel are only located in one RB set. In order to reduce resource conflicts, the PRBs corresponding to the IRBs included in the frequency domain resources of the sidelink channel may be located in the RB set, and the frequency domain resources of the sidelink channel do not include a PRB in the guard band.

In an implementation, in a case where the frequency domain resources of the sidelink channel are located in multiple RB sets, the PRBs corresponding to the frequency domain resources of the sidelink channel are located in the multiple RB sets. The PRBs corresponding to the frequency domain resources of the sidelink channel are included in PRBs corresponding to the one or more IRBs included in the frequency domain resources of the sidelink channel.

For example, the frequency domain resources of the sidelink channel includes index 2 of interlacments (denoted as IRB #2), and PRBs included in IRB #2 correspond to indices {2, 7, 12, 17, 22, 27, 32, 37} of PRBs. PRBs corresponding to indices {2, 7, 12, 17} of PRBs belong to a first RB set, and PRBs corresponding to indices {22, 27, 32, 37} of PRBs belong to a second RB set. The frequency domain resources of the sidelink channel are located in the first RB set and the second RB set, and the PRBs corresponding to the frequency domain resources of the sidelink channel include PRBs corresponding to the indices {2, 7, 12, 17, 22, 27, 32, 37} of PRBs.

In an implementation, the PRBs corresponding to the frequency domain resources of the sidelink channel include a PRB in the guard band.

For example, the frequency domain resources of the sidelink channel includes index 2 of interlacements (denoted as IRB #2), and PRBs included in IRB #2 correspond to indices {2, 7, 12, 17, 22, 27, 32, 37} of PRBs. PRBs corresponding to indices {2, 7, 12} of PRBs belong to the first RB set, and PRBs corresponding to indices {17, 22} of PRBs are located in the guard band, and PRBs corresponding to indices {27, 32, 37} of PRBs belong to the second RB set. The frequency domain resources of the sidelink channel are located in the first RB set and the second RB set, and the PRBs corresponding to the frequency domain resources of the sidelink channel include the PRBs corresponding to the indices {2, 7, 12, 17, 22, 27, 32, 37} of PRBs.

In an implementation, the PRBs corresponding to the frequency domain resources of the sidelink channel do not include the PRB in the guard band. That is to say, the PRBs corresponding to the frequency domain resources of the sidelink channel may not include PRBs corresponding to the IRBs in the guard band.

For example, the frequency domain resources of the sidelink channel includes index 2 of interlacements (denoted as IRB #2), and PRBs included in IRB #2 correspond to indices {2, 7, 12, 17, 22, 27, 32, 37} of PRBs. PRBs corresponding to indices {2, 7, 12} of PRBs belong to the first RB set, and PRBs corresponding to indices {17, 22} of PRBs are located in the guard band, and PRBs corresponding to indices {27, 32, 37} of PRBs belong to the second RB set. The frequency domain resources of the sidelink channel are located in the first RB set and the second RB set, and the PRBs corresponding to the frequency domain resources of the sidelink channel include PRBs corresponding to the indices {2, 7, 12, 27, 32, 37} of PRBs, but do not include PRBs corresponding to the indices {17, 22} of PRBs in the guard band.

In an implementation, the sidelink channel includes at least one of: a PSCCH or a PSSCH.

For example, frequency domain resources of the PSCCH include one or more IRBs, and PRBs corresponding to the frequency domain resources of the PSCCH are located in one RB set. PRBs corresponding to frequency domain resources of the PSCCH do not include the PRBs in the guard band.

For another example, the frequency domain resources of the PSCCH includes one or more IRBs, and PRBs corresponding to the frequency domain resources of the PSCCH are located in multiple RB sets. PRBs corresponding to the frequency domain resources of the PSCCH may include the PRBs in the guard band, or may not include the PRBs in the guard band.

For another example, frequency domain resources of the PSSCH include one or more IRBs, and PRBs corresponding to the frequency domain resources of the PSSCH are located in one RB set. PRBs corresponding to the frequency domain resources of the PSSCH do not include the PRBs in the guard band.

For another example, the frequency domain resources of the PSSCH includes one or more IRBs, and PRBs corresponding to the frequency domain resources of the PSSCH are located in multiple RB sets. The PRBs corresponding to the frequency domain resources of the PSSCH may include the PRBs in the guard band, or may not include the PRBs in the guard band.

In an implementation, the sidelink channel is a PSFCH, and the PSFCH is not mapped to the PRBs in the guard band.

In an implementation, frequency domain resources of the PSFCH are located in one RB set.

For example, the frequency domain resources of the PSFCH include one or more IRBs, and the PRBs corresponding to the frequency domain resources of the PSFCH are located in one RB set. The PRBs corresponding to the frequency domain resources of the PSFCH do not include the PRBs in the guard band.

In an implementation, the sidelink channel is a sidelink synchronization signal block (S-SSB), and the S-SSB is not mapped to the PRBs in the guard band.

In an implementation, frequency domain resources of the S-SSB are located in one RB set.

For example, the frequency domain resources of the S-SSB include one or more IRBs, and PRBs corresponding to the frequency domain resources of the S-SSB are located in one RB set. PRBs corresponding to the frequency domain resources of the S-SSB do not include the PRBs in the guard band.

In an implementation, a size of the frequency domain resources of the sidelink channel is P PRBs, the IRBs corresponding to the frequency domain resources of the sidelink channel include Q PRBs, where $P \leq Q$, and P and Q are positive integers. The mapping manner between the frequency domain resources of the sidelink channel and the sidelink transmission resources includes one of the following methods.

Manner 1, mapping is performed in a first order of indices of the IRBs and then a second order of indices of the PRBs corresponding to one IRB, until the number of the PRBs to which the sidelink channel is mapped is P; or mapping is performed in an order of the IRB and then PRB, until the number of PRBs to which the sidelink channel is mapped is P.

For example, mapping is performed in an order of the indices of the IRBs from low to high and then in an order of the indices of the PRBs corresponding to the IRB from low to high, until the number of PRBs to which the sidelink channel is mapped is P. For another example, mapping is performed in an order of the indices of the IRBs from high to low and then in an order of the indices of the PRBs corresponding to the IRB from high to low, until the number of PRBs to which the sidelink channel is mapped is P.

Manner 2, P PRBs are determined in a first order of the indices of the IRBs and then a second order of the indices of the PRBs corresponding to one IRB, and the sidelink channel is mapped to the P PRBs in a third order of the indices of the PRBs. Alternatively, P PRBs are determined in an order of the IRBs and then PRBs, and the sidelink channel is mapped to the P PRBs in the third order of the indices of the PRBs.

For example, P PRBs are determined in the order of the indices of the IRBs from low to high and then the order of the indices of the PRBs corresponding to the IRB from low to high, and the sidelink channel is mapped to the P PRBs in the order of the indices of the PRBs from low to high. For another example, P PRBs are determined in the order of the indices of the IRBs from high to low and then the order of the indices of the PRBs corresponding to one IRB from high to low, and the sidelink channel is mapped to the P PRBs in the order of the indices of the PRBs from high to low or from low to high.

Manner 3, mapping is performed in a first order of indices of RB sets, a second order of the indices of the IRBs and then a third order of the indices of the PRBs corresponding to one IRB, until the number of PRBs to which the sidelink channel is mapped is P. Alternatively, mapping is performed in an order of the RB sets, then the IRBs and finally the PRBs, until the number of PRBs to which the sidelink channel is mapped is P.

For example, mapping is performed in the order of the indices of the RB sets from low to high, the order of the index of the IRB from low to high, and then in an order of the index of the PRB corresponding to one IRB from low to high, until the number of PRBs mapped to the sidelink channel is P. For another example, mapping is performed in the order of the indices of the RB sets from high to low, the order of the indices of the IRBs from high to low and then the order of the indices of the PRBs corresponding to one IRB from high to low, until the number of PRBs to which the sidelink channel is mapped is P.

Manner 4, P PRBs are determined in the first order of the indices of the RB sets, in the second order of the indices of the IRBs and then in the third order of the indices of the PRBs corresponding to one IRB, and the sidelink channel is mapped to the P PRBs in a fourth order of the indices of the PRBs. Alternatively, P PRBs are determined in the order of RB sets, then IRBs and finally PRBs, and the sidelink channel is mapped to the P PRBs in a fourth order of the indices of the PRBs.

For example, P PRBs are determined in the order of the indices of the RB sets from low to high, in the order of the indices of the IRBs from low to high and then in the order of the indices of the PRBs corresponding to one IRB from low to high, and the sidelink channel is mapped to the P PRBs in the order of the indices of the PRBs from low to high. For another example, P PRBs are determined in the order of the indices of the RB sets from high to low, in the order of the indices of the IRBs from high to low and then in the order of the indices of the PRBs corresponding to one IRB from high to low, and the sidelink channel is mapped to the P PRBs in the order of the indices of the PRBs from high to low or from low to high.

In the above methods, the index of the RB set is an index corresponding to a RB set where the frequency domain resources of the sidelink channel are located, and the indices of the IRBs are indices of one or more IRBs included in the frequency domain resources of the sidelink channel.

In the embodiments of the present application, spectrum utilization may be improved and interference may be reduced through the mapping relationship between the frequency domain resources of the sidewalk channel including one or more IRBs and the sidelink transmission resources.

FIG. 13 is a schematic flowchart of a sidelink transmission method 1300 according to an embodiment of the present application. The method may optionally be applied to the systems shown in FIGS. 1 to 7, which is not limited thereto. The method includes at least part of the following.

In S1310, a terminal obtains a transmission block size (TBS) of a sidelink channel. The TBS is determined according to a first number of PRBs.

The embodiment may be combined with any sidelink transmission method of the above embodiments. For example, step S1110 may be performed first, and after the terminal obtains the mapping relationship between the RB sets and the PRBs in the guard band, step S1210 may be performed to obtain the mapping relationship between the frequency domain resources of the sidelink channel and the sidelink transmission resources, and then step S1310 may be performed to obtain the TBS of the sidelink channel. For another example, step S1110 may be performed first, and after the terminal obtains the mapping relationship between the RB sets and the PRBs in the guard band, step S1310 may be performed to obtain the TBS of the sidelink channel. For yet another example, step S1210 may be performed to obtain the mapping relationship between the frequency domain resources of the sidelink channel and the sidelink transmission resources, and then step S1310 may be performed to obtain the TBS of the sidelink channel.

In the embodiments of the present application, the TBS of the sidelink channel is a TBS corresponding to sidelink data carried by the sidelink channel.

In the embodiments of the present application, the terminal may be a transmitting terminal of a sidelink communication system or a receiving terminal of the sidelink communication system. The terminal may autonomously determine the TBS of the sidelink channel according to the first number of PRBs, or may receive the TBS of the sidelink channel determined according to the first number of PRBs from other devices. The other devices include network devices or other terminal devices.

In an implementation, the terminal determines the transmission block size according to a total number of resource elements (REs) of the PSSCH channel, and the total number of REs of the PSSCH channel is determined according to the following formula:

$$N_{RE} = N'_{RE} \cdot n_{PRB} - N_{RE}^{SCI,1} - N_{RE}^{SCI,2}$$

where,

$$N'_{RE} = N_{sc}^{RB}\left(N_{symb}^{sh} - N_{symb}^{PSFCH}\right) - N_{oh}^{PRB} - N_{RE}^{DMRS}$$

$n_{PRB}$ indicates the number of PRBs allocated to the PSSCH channel. Optionally, in some implementations, the parameter is determined according to the first number of PRBs;

$N_{RE}^{SCI,1}$ indicates a total number of REs occupied by PSCCH and PSCCH-DMRS; optionally, in some implementations, the parameter is determined according to a second number of PRBs;

$N_{RE}^{SCI,2}$ indicates a number of symbols after 2-nd stage SCI coded modulation (assuming $\gamma = 0$);

$N_{sc}^{RB} = 12$ indicates a number of sub-carriers included in one PRB;

$N_{symb}^{sh} = sl - LengthSymbols - 2, sl - LengthSymbols$ indicates a number of sidelink symbols in one time slot;

if a high layer configuration parameter *sl-PSFCH-Period* takes a value of 2 or 4: if *'PSFCH overhead indication'* in SCI format 1-A indicates 1, $N_{symb}^{PSFCH} = 3$, otherwise $N_{symb}^{PSFCH} = 0$; if the high layer configuration parameter *sl-PSFCH-Period* takes a value of 0, $N_{symb}^{PSFCH} = 0$; if a high layer configuration parameter *sl-PSFCH-Period* takes a value of 1, $N_{symb}^{PSFCH} = 3$;

$N_{oh}^{PRB}$ is determined by a high layer parameter *sl-X-Overhead*;

$N_{RE}^{DMRS}$ is determined by a high layer parameter *sl-PSSCH DMRS-TimePattern.*

The number of symbols after the 2-nd stage SCI coded modulation is determined by the following formula:

$$Q'_{SCI2} = \min\left\{\left\lceil \frac{\left(O_{SCI2} + L_{SCI2}\right) \cdot \beta_{offset}^{SCI2}}{Q_m^{SCI2} \cdot R} \right\rceil, \left\lceil \alpha \sum_{l=0}^{N_{symbol}^{PSSCH}-1} M_{sc}^{SCI2}(l) \right\rceil\right\} + \gamma$$

where,

$O_{SCI2}$ indicates a number of 2-nd stage SCI information bits, which is determined by the format of the 2-nd stage SCI;
$L_{SCI2}$ indicates a CRC length of the 2-nd stage SCI, which is 24 bits;

$\beta_{offset}^{SCI2}$ is code rate offset of the 2-nd stage SCI, which is determined according to *"Beta offset indicator"* field in SCI format 1-A;

$Q_m^{SCI2} = 2$, which is a modulation order of the 2-nd stage SCI;
R is a code rate corresponding to an index of MCS indicated by "Modulation and coding scheme" field in SCI format 1-A;

$M_{sc}^{SCI2}(l) = M_{sc}^{PSSCH}(l) - M_{sc}^{PSCCH}(l)$, which indicats a number of REs on the *l-th* OFDM symbol that may be used to map the 2-nd stage SCI,

$M_{sc}^{PSSCH}(l)$ indicates a number of sub-carriers included in the scheduling bandwidth of the PSSCH, optionally, the parameter is determined according to the first number of PRBs,

$M_{sc}^{PSCCH}(l)$ is a number of sub-carriers used for PSCCH and PSCCH-DMRS on the *l-th* OFDM symbol, optionally, the parameter is determined according to the second number of PRBs.

$l = 0, 1, \ldots, N_{symbol}^{PSSCH} - 1$, and $N_{symbol}^{PSSCH} = \breve{N}_{symbol}^{sh} - N_{symbol}^{PSFCH}$

$\gamma$ indicates a number of REs remaining in the PRB where the last 2-nd stage SCI modulation symbol is located, and the parameter is used to ensure that resources occupied by the 2-nd stage SCI are an integer number of PRBs.

$\alpha$ is determined by a high layer configuration parameter "sl-Scaling".

In some implementations, the first number of PRBs is used to determine the number of PRBs or the number of sub-carriers of the PSSCH; and the second number of PRBs is used to determine the number of PRBs or the number of sub-carriers of the PSCCH (including the PSCCH-DMRS). The PSCCH is associated with the PSSCH. That is, the 1-st stage SCI carried by the PSCCH is used to indicate the resources of the PSSCH.

In an implementation, the first number of PRBs or the second number of PRBs is determined based on at least one of the following parameters:

a number of sub-channels corresponding to frequency domain resources of the sidelink channel;

a number of IRBs corresponding to one sub-channel;

a number of PRBs included in one RB set;

a number of PRBs corresponding to frequency domain resources of a resource pool;

a number of IRBs included in one RB set;

a number of IRBs corresponding to a sidelink system;

a number of IRBs corresponding to all sub-channels included in the resource pool; or

a sum of a number of IRBs included in each RB set included in the resource pool.

The sidelink channel indicates the PSCCH or the PSSCH.

For example, the first number of PRBs or the second number of PRBs is calculated based on the number of sub-channels corresponding to the frequency domain resources of the sidelink channel, the number of IRBs corresponding to one sub-channel, the number of PRBs included in one RB set, and the number of IRBs included in one RB set.

For example, the first number of PRBs or the second number of PRBs is calculated based on the number of sub-channels corresponding to the frequency domain resources of the sidelink channel, the number of IRBs corresponding to one sub-channel, the number of PRBs included in one RB set, and the number of IRBs corresponding to the sidelink system.

For another example, the first number of PRBs or the second number of PRBs is calculated based on the number of sub-channels corresponding to the frequency domain resources of the sidelink channel, the number of IRBs corresponding to one sub-channel, the number of PRBs corresponding to the frequency domain resources of the resource pool, and the number of IRBs corresponding to the sidelink system.

For yet another example, the first number of PRBs or the second number of PRBs is calculated based on the number of sub-channels corresponding to the frequency domain resources of the sidelink channel, the number of IRBs corresponding to one sub-channel, the number of PRBs corresponding to the frequency domain resources of the resource pool, and the number of IRBs corresponding to all sub-channels included in the resource pool.

For yet another example, the first number of PRBs or the second number of PRBs is calculated based on the number of sub-channels corresponding to the frequency domain resources of the sidelink channel, the number of IRBs corresponding to one sub-channel, the number of PRBs corresponding to the frequency domain resources of the resource pool, and the sum of the number of IRBs included in each RB set included in the resource pool.

In an implementation, the number of PRBs included in the one RB set includes the number of all or a portion of PRBs in the guard band, or does not include the number of PRBs in the guard band. Specific examples can be found in an example of the method 1100 regarding the mapping relationship between RB sets and PRBs, which will not be repeated here.

In an implementation, in a RB set, different IRBs correspond to a same or different number of PRBs.

For example, in a set #1 RBs, the number of PRBs corresponding to IRB #0 is 5, and the number of PRBs corresponding to IRB #2 is 4. For another example, in a RB set #2, the number of PRBs corresponding to IRB #0 is 5, and the number of PRBs corresponding to IRB #2 is 5.

In an implementation, in a case where the resource pool includes multiple RB sets, the number of PRBs corresponding to the frequency domain resources of the resource pool includes corresponding PRBs in the guard band, or does not include the corresponding PRBs in the guard band.

For example, the resource pool includes a RB set #0, a RB set #1, and a RB set #2. The RB set #0 includes 50 PRBs, the RB set #1 includes 50 PRBs, and the RB set #2 includes 50 PRBs. A guard band between the RB set #0 and the RB set #1 includes 4 PRBs, and a guard band between the RB set #1 and the RB set #2 includes 6 PRBs. In a case, the resource pool does not include corresponding PRBs in the guard band, and the resource pool may includes 150 PRBs. In another case, the resource pool includes the corresponding PRBs in the guard band, and the resource pool may include 160 PRBs.

In an implementation, the first number of PRBs or the second number of PRBs is determined based on the number of sub-channels corresponding to the frequency domain resources of the sidelink channel, the number of IRBs corresponding to one sub-channel, and a first value.

In an embodiment, the first value is determined according to a third number of PRBs and a first number of IRBs.

The third number of PRBs includes at least one of: the number of PRBs included in one RB set; the number of PRBs corresponding to the frequency domain resources of the resource pool. It should be noted that in a case of determining the third number of PRBs, the corresponding PRBs in the guard band may be included, or the corresponding PRBs in the guard band may not be included.

The first number of IRBs includes at least one of: the number of IRBs included in one RB set; the number of IRBs corresponding to the sidelink system; the number of IRBs corresponding to all sub-channels included in the resource pool; or the sum of the number of IRBs included in each RB set included in the resource pool.

In an implementation, the first value is determined according to a ratio of the third number of PRBs to the first number of IRBs. For example, the first value may be equal to the third number of PRBs divided by the first number of IRBs and then rounded up. For another example, the first value may be equal to the third number of PRBs divided by the first number of IRBs and then rounded down.

In an implementation, the first number of IRBs is used to determine the number of PRBs or the number of sub-carriers of the PSSCH, and the second number of PRBs is used to determine the number of sub-carriers of the PSCCH.

It should be noted that the calculation manners of the first number of PRBs and the second number of PRBs may be the same or different. In the embodiments of the present application, the TBS may be reasonably determined according to the number of PRBs, which may prevent the TBS from being different due to the use of different IRB resources each time the PSSCH is transmitted.

FIG. 14 is a schematic block diagram of a terminal 1400 according to an embodiment of the present application. The terminal 1400 may include:

a processing unit 1410, used to obtain a mapping relationship between resource block (RB) sets and physical resource blocks (PRBs) in a guard band.

In an implementation, the guard band exists between a first RB set and a second RB set.

In an implementation, the guard band includes A PRBs, X PRBs in the guard band belong to the first RB set, and Y PRBs in the guard band belong to the second RB set,

where, $0 \leq X \leq A$, $0 \leq Y \leq A$, and X, Y and A are positive integers.

In an implementation, $X+Y=A$.

In an implementation, X and/or Y are determined according to configuration information. The configuration information may be included in resource pool configuration information or sidelink bandwidth part (SL BWP) configuration information.

In an implementation, X and/or Y are determined according to protocol predefined information.

In an implementation, the configuration information is pre-configuration information or network configuration information.

In an implementation, the X PRBs in the guard band that belong to the first RB set include X PRBs in the guard band that are in an order of indices of PRBs from low to high.

In an implementation, the Y PRBs in the guard band that belongs to the second RB set include Y PRBs in the guard band that are in an order of indices of PRBs from high to low.

In an implementation, the X PRBs in the guard band that belongs to the first RB set include X PRBs in the guard band that correspond to IRBs that are in an order of indices of IRBs from low to high.

In an implementation, the X PRBs in the guard band that belong to the first RB set are determined in the order of the indices of the IRBs from low to high and then the order of the indices of the PRBs from low to high.

In an implementation, the Y PRBs in the guard band that belongs to the second RB set include Y PRBs in the guard band that are included in IRBs that are in an order of indices of IRBs from high to low.

In an implementation, the Y PRBs in the guard band that belongs to the second RB set are determined in the order of the indices of the IRBs from high to low and then in the order of the indices of the PRBs from high to low.

In an implementation, the indices of the PRBs in the guard band have a correspondence with the indices of the IRBs.

The terminal 1400 in the embodiments of the present application may implement the corresponding functions of the terminal in the embodiment of the method 1100. The processes, functions, implementations and beneficial effects corresponding to various modules (sub-modules, units or components, etc.) of the terminal 1400 may be found in the corresponding description in the embodiment of the method 1100, which will not be repeated here. It should be noted that the described functions in the various modules (sub-modules, units or components, etc.) of the terminal 1400 in the embodiments of the present application may be implemented by different modules (sub-modules, units or components, etc.) or by the same module (sub-module, unit or component, etc.).

FIG. 15 is a schematic block diagram of a terminal 1500 according to an embodiment of the present application. The terminal 1500 may include:

a processing unit 1510, used to obtain a mapping relationship between frequency domain resources of a sidelink channel and sidelink transmission resources. The frequency domain resources of the sidelink channel include one or more IRBs.

In an implementation, in a case where the frequency domain resources of the sidelink channel are not located in multiple RB sets, PRBs corresponding to the frequency domain resources of the sidelink channel are located in one RB set, where the PRBs corresponding to the frequency domain resources of the sidelink channel are comprised in PRBs corresponding to the one or more IRBs comprised in the frequency domain resources of the sidelink channel.

In an implementation, in a case where the frequency domain resources of the sidelink channel are located in multiple RB sets, PRBs corresponding to the frequency domain resources of the sidelink channel are located in the multiple RB sets, where the PRBs corresponding to the frequency domain resources of the sidelink channel are comprised in PRBs corresponding to the one or more IRBs comprised in the frequency domain resources of the sidelink channel.

In an implementation, the PRBs corresponding to the frequency domain resources of the sidelink channel comprise a PRB in a guard band.

In an implementation, the PRBs corresponding to the frequency domain resources of the sidelink channel do not comprise a PRB in a guard band.

In an implementation, the sidelink channel includes at least one of: a PSCCH or a PSSCH.

In an implementation, the sidelink channel is a PSFCH, and the PSFCH is not mapped to a PRB in the guard band.

In an implementation, frequency domain resources of the PSFCH are located in one RB set.

In an implementation, the sidelink channel is an S-SSB, and the S-SSB is not mapped to the PRBs in the guard band.

In an implementation, frequency domain resources of the S-SSB are located in one RB set.

In an implementation, a size of the frequency domain resources of the sidelink channel is P PRBs, IRBs corresponding to the frequency domain resources of the sidelink channel comprise Q PRBs, and a mapping manner between the frequency domain resources of the sidelink channel and the sidelink transmission resources comprises one of the following manners.

Manner 1, mapping is performed in a first order of indices of the IRBs, and then in a first order of indices of IRBs and then a second order of indices of PRBs corresponding to one IRB, until a number of PRBs to which the sidelink channel is mapped is P. Alternatively, mapping is performed in an order of the IRBs and then PRBs, until the number of PRBs to which the sidelink channel is manpped is P.

Manner 2, P PRBs are determined first in the first order of the indices of the IRBs and then the second order of the indices of the PRBs corresponding to one IRB, and the sidelink channel is mapped to the P PRBs in a third order of the indices of the PRBs. Alternatively, P PRBs are determined in the order of the IRBs and then PRBs, and the sidelink channel is mapped to the P PRBs in the third order of the indices of the PRBs.

Manner 3, mapping is performed in a first order of indices of RB sets, a second order of the indices of the IRBs and then a third order of the indices of the PRBs corresponding to one IRB, until the number of PRBs to which the sidelink channel is mapped is P. Alternatively, mapping is performed in the order of RB sets, then IRBs and finally PRBs, until the number of PRBs to which the sidelink channel is manpped is P.

Manner 4, P PRBs are determined in the first order of the indices of the RB sets, the second order of the indices of the IRBs and then the third order of the indices of the PRBs corresponding to one IRB, and the sidelink channel is mapped to the P PRBs in a fourth order of the indices of the PRBs. Alternatively, P PRBs are determined in the order of RB sets, then IRBs and finally PRBs, and the sidelink channel is mapped to the P PRBs in the fourth order of the indices of the PRBs.

In the above manners, P is less than or equal to Q ($P \leq Q$), and P and Q are positive integers, the indices of the RB sets are indices corresponding to RB sets where the frequency domain resources of the sidelink channel are located, and the indices of the IRBs are indices of the one or more IRBs comprised in the frequency domain resources of the sidelink channel.

The terminal 1500 of the embodiments of the present application may be combined with the terminal 1400 of the above embodiments. For example, the processing unit 1510 of the terminal 1500 may perform all or a portion of the functions of the processing unit 1510 of the terminal 1400.

The terminal 1500 of the embodiments of the present application may implement the corresponding functions of the terminal of the above method 1200 embodiment. The processes, functions, implementations and beneficial effects corresponding to various modules (sub-modules, units or components, etc.) in the terminal 1500 may be found in the corresponding description in the above method 1200 embodiment, which will not be repeated here. It should be noted that the described functions of the various modules (sub-modules, units or components, etc.) in the terminal 1500 of the embodiments of the present application may be implemented by different modules (sub-modules, units or components, etc.) or by the same module (sub-module, unit or component, etc.).

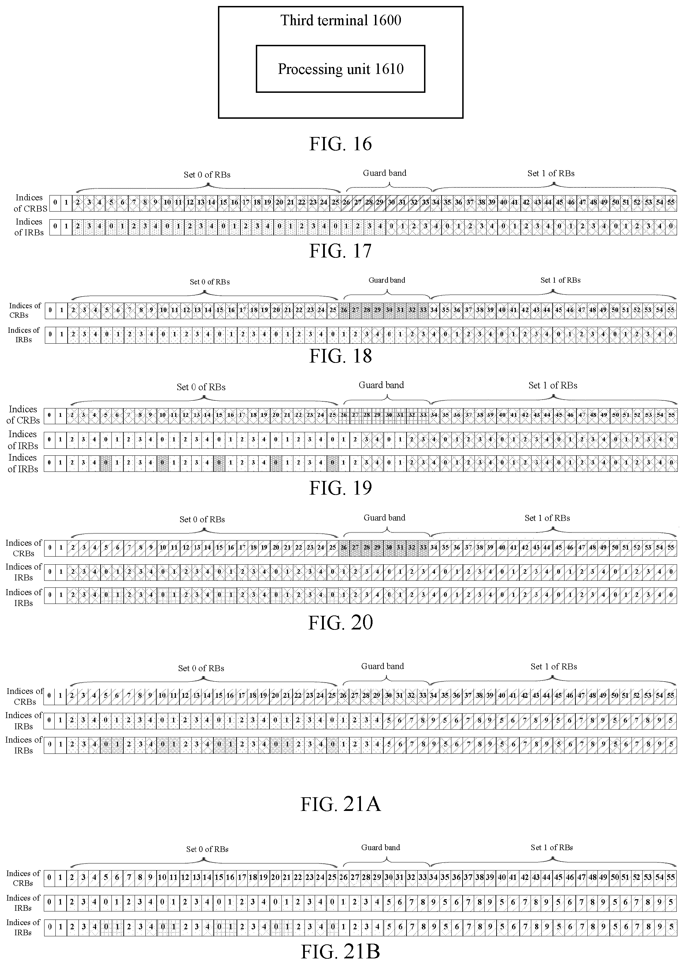

FIG. 16 is a schematic block diagram of a terminal 1600 according to an embodiment of the present application. The terminal 1600 may include:
a processing unit 1610, used to obtain a transmission block size (TBS) of a sidelink channel, the TBS being determined according to a first number of PRBs and/or a second number of PRBs.

In an implementation, the first number of PRBs and/or the second number of PRBs is determined based on at least one of the following parameters:

- a number of sub-channels corresponding to frequency domain resources of the sidelink channel;
- a number of IRBs corresponding to one sub-channel;
- a number of PRBs comprised in one RB set;
- a number of PRBs corresponding to frequency domain resources of a resource pool;
- a number of IRBs comprised in one RB set;
- a number of IRBs corresponding to a sidelink system;
- a number of IRBs corresponding to all sub-channels comprised in the resource pool; or
- a sum of a number of IRBs comprised in each RB set comprised in the resource pool.

In an implementation, the number of PRBs comprised in the one RB set comprises a number of all or a portion of PRBs in a guard band, or does not comprise the number of the PRBs in the guard band.

In an implementation, in a RB set, different IRBs correspond to a same or different number of PRBs.

In an implementation, in a case where in a case where the resource pool comprises multiple RB sets, the number of PRBs corresponding to the frequency domain resources of the resource pool comprises corresponding PRBs in a guard band, or does not comprise the corresponding PRBs in the guard band.

In an implementation, the first number of PRBs is determined based on the number of sub-channels corresponding to the frequency domain resources of the sidelink channel, the number of IRBs corresponding to one sub-channel, and a first value.

In an embodiment, the first value is determined according to a third number of PRBs and a first number of IRBs.

The third number of PRBs comprises at least one of: the number of PRBs comprised in the one RB set; or the number of PRBs corresponding to the frequency domain resources of the resource pool.

The first number of IRBs comprises at least one of: the number of IRBs comprised in the one RB set; the number of IRBs corresponding to the sidelink system; the number of IRBs corresponding to all sub-channels comprised in the resource pool; or the sum of the number of IRBs comprised in each RB set comprised in the resource pool.

In an implementation, the first value is determined according to a ratio of the third number of PRBs to the first number of IRBs.

In an implementation, the first number of PRBs is used to determine a number of PRBs or a number of sub-carriers of a PSSCH, and the second number of PRBs is used to determine a number of sub-carriers of a PSCCH.

The terminal 1600 in the embodiments of the present application may be combined with the terminal 1400 and/or the terminal 1500 of the above embodiments. For example, the processing unit 1610 of the terminal 1600 may perform all or a portion of the functions of the processing unit 1510 of the terminal 1400 and/or the processing unit 1510 of the terminal 1500.

The terminal 1600 in the embodiments of the present application may implement the corresponding functions of the terminal in the aforementioned method 1300 embodiment. The processes, functions, implementation methods and beneficial effects corresponding to various modules (sub-modules, units or components, etc.) in the terminal 1600 may be found in the corresponding description in the above method 1300 embodiment, which will not be repeated here. It should be noted that the functions described in the various modules (sub-modules, units or components, etc.) in the terminal 1600 in the embodiments of the present application may be implemented by different modules (sub-modules, units or components, etc.) or by the same module (sub-module, unit or component, etc.).

In the NR SL system, a minimum allocation granularity of frequency domain resources of sidelink transmission resources is sub-channel, and one sub-channel includes a plurality of consecutive RBs. Frequency domain resources indication information in downlink control information (DCI) or sidelink control information (SCI) includes sub-channel information corresponding to a starting position of the frequency domain resources and the number of sub-channels corresponding to the frequency domain resource. In order to reuse the frequency domain resources indication manner in the NR SL system as much as possible, minimum allocation granularity of the frequency domain resources in the SL-U system may also be sub-channel. One sub-channel may include one or more interlaced resources (i.e., interlaced resource blocks). Optionally, in a case where one sub-channel includes a plurality of interlaced resources, the plurality of interlaced resources may be interlaced resources adjacent to each other in the frequency domain. Since multiple RB sets can be included in a resource pool in the SL-U system, a guard band may be configured between two adjacent RB sets. In some cases, the PRBs included in the guard band may be used for sidelink transmission to improve resource utilization.

Example 1, mapping relationship or correspondence between RB sets and PRBs in the guard band

The guard band includes A PRBs, and two adjacent RB sets are marked as RB set #k and RB set #(k+1) respectively. X PRBs in the guard band belong to RB set #k; and Y PRBs in the guard band belong to RB set #(k+1), where $0 \leq X \leq A$; $0 \leq Y \leq A$.

Optionally, X+Y=A.

In a case of X=0, it indicats that all PRBs in the guard band do not belong to the RB set #k.

In a case of X=A, it indicats that all PRBs in the guard band belong to the the RB set #k.

In a case of $0 < X < A$, it indicats that a part of PRBs in the guard band belong to the RB set #k.

Optionally, X or Y is determined according to configuration information. The configuration information may be included in resource pool configuration information or sidelink bandwidth part (SL BWP) configuration information. The configuration information may be pre-configuration information or network configuration information.

In some implementations, X = ceil(A/2)or X = floor(A/2) orX = round(A/2), where ceil() indicates a rounding up operation, floor() indicates a rounding down operation, and round() indicates a rounding operation in a rounding manner. Optionally, Y=A-X;

In some further embodiments, X = ceil(A/2) or X = floor(A/2) orX = round(A/2), where ceil() indicates a rounding-up operation, floor() indicates a rounding-down operation, and round() indicates a rounding-up operation in a rounding manner. Optionally, X=A-Y.

Optionally, in a case where X PRBs in the guard band belong to RB set #k, the following mapping manners may be included.

Manner 1: the X PRBs correspond to X PRBs in the guard band that are in an order of indices of the PRBs (or indices of the CRBs) from low to high.

Manner 2: the X PRBs correspond to X PRBs in the guard band that correspond to IRBs in an order of indices of the IRBs from low to high. In a process of determining the X PRBs with this manner, they are determined in the order of the indices of the IRBs from low to high and then the order of the indices of the PRBs from low to high, or in the order of IRBs and then PRBs.

Example 1: as shown in FIGS. 17 and 18, the sidelink SCS is 30 kHz. One RB set includes 5 interlaced resources. A mapping relationship between IRBs and CRBs (which may also be PRBs) is shown in FIGS. 17 and 18. Indices of the IRBs is 0 to 4. The frequency domain resources occupied by the sidelink channel may be indicated by indicating information of a RB set where the frequency domain resources of the sidelink channel are located and IRB information in the RB set. Optionally, interlaced resources in the two RB sets may be indexed sequentially. That is, since the resource pool includes two RB sets, the resource pool includes a total of 10 interlaced resources. The RB set 0 includes interlaces 0 to 4, and the RB set 1includes interlaces 5 to 9. In this case, the frequency domain resources occupied by the sidelink channel may be indicated by indicating IRB information or sub-channel information where the frequency domain resources of the sidelink channel are located may be indicated. In this example, a description is given by taking the former manner as an example. A guard band is configured between two RBs sets, including 8 PRBs, where X = ceil (8/2) = 4 PRBs, which belong to the first RB set and the other 4 PRBs belong to the second RB set.

The following two manners can be used to determine to which RB set the PRBs in the guard band belong.

Example 1-1 (corresponding to the maner 1): 4 PRBs corresponding to low indices of PRBs (i.e., CRBs) in the order of PRBs from low to high in the guard band belong to the first RB set, as shown in a portion of indices 26 to 29 of CRBs in FIG. 17. 4 PRBs corresponding to high indices of PRBs in the order of PRBs from low to high in the guard band belong to the second RB set, as shown in a portion of indices 30 to 33 of CRBs in FIG. 17.

Example 1-2 (corresponding to the manner 2): 4 PRBs corresponding to low indices of IRBs in the order of the indices of the IRBs from low to high in the guard band belong to the first RB set, as shown in a portion of indices 26, 27, 30 and 31 of CRBs in FIG.18. 4 PRBs corresponding to high indices of IRBs in the order of indices of the IRBs from low to high in the guard band belong to the second RB set, as shown in a portion of indices 28, 29, 32 and 33 of CRBs in FIG. 18. Among 8 PRBs included in the guard band, the number of PRBs corresponding to index 0 of the IRBs is 1, and the PRB belongs to the first RB set. The number of PRBs corresponding to index 1 of the IRBs is 2, and the 2 PRBs belong to the first RB set. The number of PRBs corresponding to index 2 of the IRBs is 2, and a PRB with a low index of PRB of the 2 PRBs belongs to the first RB set, i.e., the RB set 0. The remaining 4 PRBs in the guard band belong to the second RB set, i.e., the RB set 1. That is, the PRBs in the guard band that belong to the first RB set are determined according to the order of the indices of the IRBs from low to high and then the order of the indices of the PRBs from low to high.

Example 2: mapping relationship between a sidelink channel and transmission resources

In the SL-U system, frequency domain resources of the PSSCH channel are based on sub-channel granularity, and one sub-channel includes one or more IRBs. The frequency domain resources of the PSCCH do not exceed frequency domain resources included in one sub-channel.

(1) For PSCCH:

In a case, the frequency domain resources of the PSCCH include one or more IRBs, and PRBs corresponding to the frequency domain resources of the PSCCH are located in one RB set. The PSCCH may not be mapped to PRBs in the guard band.

In yet another case, the frequency domain resources of the PSCCH include one or more IRBs, and the PRBs corresponding to the frequency domain resources of the PSCCH are located in multiple RB sets. The PSCCH may be mapped to the PRBs in the guard band, or may not be mapped to the PRBs in the guard band.

In a case, if a size of the frequency domain resources of the PSCCH is P PRBs, the IRBs corresponding to the frequency domain resources of the PSCCH include Q PRBs and P is less than or equal to Q, the PSCCH is mapped to P PRBs with low indices of the PRBs among the Q PRBs.

Example 2-1: as shown in FIG. 19, the mapping relationship between PRBs in the guard band and IRBs refers to FIG. 18. One sub-channel includes one IRB. For example, sub-channel 0 corresponds to IRB #0, sub-channel 1 corresponds to IRB #1, and so on. One frequency domain resource of the PSCCH corresponds to one sub-channel, that is, corresponds to one IRB. Frequency domain resources of the PSCCH corresponding to sub-channel 0 include PRBs corresponding to IRBs #0 in the RB set 0, as shown in the five boxes in which indices of IRBs are 0 in the RB set 0 in FIG. 19. The PSCCH is not mapped to the PRB corresponding to IRB #0 in the guard band (i.e., index 30 of CRB).

In another case, if the size of the frequency domain resources of the PSCCH is P PRBs, the IRBs corresponding to the frequency domain resources of the PSCCH include Q PRBs, and P is less than or equal to Q. The mapping relationship between the PSCCH and the PRBs corresponding to its frequency domain resources is at least one of the following manners.

Manner 1, mapping is performed in an order of indices of IRBs and then in an order of indices of PRBs corresponding to an IRB, until the number of PRBs to which the sidelink channel is mapped is P.

Example 2-2: referring to FIG. 20, a resource pool includes two RB sets, and the mapping relationship between the PRBs in the guard band and IRBs refers to FIG. 18. One sub-channel includes two IRBs. For example, sub-channel 0 corresponds to IRB #0 and IRB #1, sub-channel 1 corresponds to IRB #2 and IRB #3, and so on. Mapping is performed in an order of indices of IRBs corresponding to sub-channels from low to high and then in an order of indices of PRBs corresponding to an IRB from low to high, until the number of PRBs to which the PSCCH is mapped is P. In the example, P=8, the frequency domain resources of the PSCCH are located in the RB set 0, and include the sub-channel 0 corresponding to IRB #0 and IRB #1. The PSCCH is mapped to PRBs corresponding to IRB #0, and then mapped to IRBs corresponding to IRB #1. The PRBs corresponding IRB #0 include PRBs whose indices of PRBs are {5, 10, 15, 20, 25}, i.e., 5 PRBs, which is less than P. Therefore, the PSCCH is then mapped to PRBs corresponding to IRB #1, and mapped in an order of indices of the PRBs from low to high, That is, the PSCCH is mapped to 3 PRBs whose indices of PRBs are {6,11,16}. Therefore, an order of the frequency domain resources to which the PSCCH is mapped is {5, 6, 10, 11, 15, 16, 20, 25}, which are indices of PRBs of the 8 PRBs.

Manner 2, P PRBs are determined according an order of indices of IRBs and then an order of indices of PRBs corresponding to an IRB, and the PSCCH is mapped to the P PRBs in an order of the indices of the PRBs.

Example 2-3: referring to FIG. 20, a resource pool includes two RB sets, and the mapping relationship between the PRBs in the guard band and IRBs refers to FIG. 18. One sub-channel includes two IRBs. For example, sub-channel 0 corresponds to IRB #0 and IRB #1, sub-channel 1 corresponds to IRB #2 and IRB #3, and so on. P PRBs are determined according to an order of indices of IRBs corresponding to sub-channels from low to high and then an order of indices of PRBs corresponding to an IRB from low to high. In the example, P=8, the frequency domain resources of the PSCCH are located in RB set 0, and include sub-channel 0 corresponding to IRB #0 and IRB #1. PRBs corresponding the IRB #0 include PRBs with indices of PRBs {5, 10, 15, 20, 25}, i.e., 5 PRBs, which is less than P. For PRBs corresponding to the IRB #1, 3 PRBs are determined acoording to the order of the indices of the PRBs from low to high, i.e., 3 PRBs with indices of PRBs {6,11,16}. The PSCCH is mapped the 8 PRBs in the order of the indices of the PRBs from low to high. Therefore, an order of the frequency domain resources to which the PSCCH is mapped is {5, 6, 10, 11, 15, 16, 20, 25}, which are indices of PRBs of the 8 PRBs.

Manner 3, mapping is performed in an order of indices of RB sets, an order of indices of IRBs and then an order of indices of PRBs corresponding to an IRB, until the number of PRBs to which the sidelink channel is mapped is P.

Example 2-4: referring to FIG. 21A, a resource pool includes two RB sets, and the mapping relationship between the PRBs in the guard band and IRBs refers to FIG. 17. The interlaced resources in the two RB sets are indexed sequentially. Therefore, the resource pool includes a total of 10 interlaced resources. The interlaces included in the RB set 0 are 0 to 4, and the interlaces included in the RB set 1 are 5 to 9. Mapping is performed in an order of indices of RB sets from low to high, an order of indices of IRBs from low to high and then an order of indices of PRBs corresponding to an IRB. In the example, P=9. If frequency domain resources of the PSCCH include sub-channel 0 (corresponding to IRB #0 and IRB #1), the frequency domain resources of the PSCCH are located in the RB set 0. The PSCCH is mapped in the order of the indices of the RB sets from low to high (i.e., RB set 0), the order of the indices of the IRBs from low to high (i.e., the order of IRB #0 and then IRB #1) and then the order of the indices of the PRBs corresponding to an IRB. That is, the PSCCH is mapped to 5 PRBs corresponding to the IRB #0 (i.e., PRBs with indices of PRBs {5, 10, 15, 20, 25}), and then mapped to 4 PRBs corresponding to the IRB #1 (i.e., PRBs with indices of PRBs {6, 11, 16, 21}). Therefore, an order of the mapping of the PSCCH to the PRBs is {5, 10, 15, 20, 25, 6, 11, 16, 21}.

If one frequency domain resource of the PSCCH include sub-channel 2 (corresponding to IRB #4 and IRB #5), the frequency domain resources of the PSCCH are located in RB set 0 and RB set 1. The PSCCH is mapped in the order of the indices of the RB sets from low to high (i.e., the order of the RB set 0 and then the RB set 1), the order of the indices of the IRBs from low to high (i.e., the order of IRB #4 and then IRB #5), and then the order of the indices of the PRBs corresponding to an IRB. That is, the PSCCH is mapped to 5 PRBs corresponding to IRB #4 in the RB set 0 (i.e., PRBs with indices of PRBs {4, 9, 14, 19, 24}), and then mapped to 4 PRBs corresponding to the IRB #5 in the RB set 1 (i.e., PRBs with indices of PRBs {35, 40, 45, 50}). Therefore, an order of the mapping of the PSCCH to PRBs is {4, 9, 14, 19, 24, 35, 40, 45, 50}.

Manner 4: P PRBs are determined in the order of the indices of the RB sets, the order of the indices of the IRBs and then in the order of the indices of the PRBs corresponding to one IRB. The PSCCH is mapped to the P PRBs in the order of the indices of the PRBs.

Example 2-5: referring to FIG. 21A, the resource pool includes two RB sets, and the mapping relationship between the PRBs in the guard band and IRBs refers to FIG. 17. The interlaced resources in the two RB sets are indexed sequentially. Therefore, the resource pool includes a total of 10 interlaced resources. The interlaces included in the RB set 0 are 0 to 4, and the interlaces included in the RB set 1 are 5 to 9. P PRBs are determined in the order of the indices of the RB sets from low to high, the order of the indices of the IRBs from low to high and then in the orders of the indices of one PRB corresponding to one IRB. In the example, P=9. If frequency domain resources of one PSCCH include sub-channel 0 (corresponding to IRB #0 and IRB #1), the frequency domain resources of the PSCCH are located in the RB set 0. 9 PRBs are determined in the order of the indices of the RB sets from low to high (i.e., the RB set 0), the order of the indices of the IRBs from low to high (i.e., the order of IRB #0 and then IRB #1) and then the order of the indices of the PRBs corresponding to one IRB. PRBs corresponding to IRB #0 of the RB set 0 include 5 PRBs with indices of PRBs {5, 10, 15, 20, 25}, which is less than P. 4 PRBs are determined from PRBs corresponding to IRB #1 of the RB set 0 in the order of the indices of the PRBs from low to high, i.e., 4 PRBs with indices of PRBs {6, 11, 16, 21}. The PSCCH is mapped to the 9 PRBs in the order of the indices of the PRBs from low to high. Therefore, an order of frequency domain resources to which the PSCCH is mapped is {5, 6, 10, 11, 15, 16, 20, 21, 25}, which are indices of PRBs of the 9 PRBs.

If the frequency domain resources of one PSCCH include sub-channel 2 (corresponding to IRB #4 and IRB #5), the frequency domain resources of the PSCCH are located in the RB set 0 and the RB set 1. 9 PRBs are determined in the order of the indices of the RB sets from low to high (i.e., the order of the RB set 0 and then the RB set 1), the order of the indices of the IRBs from low to high (i.e., the order of IRB #4 and then IRB #5) and then the order of the indices of the PRBs corresponding to one IRB. PRBs corresponding to IRB #4 of the RB set 0 include 5 PRBs with indices of PRBs {4, 9, 14, 19, 24}, which is less than P. 4 PRBs are determined from PRBs corresponding to IRB #5 of the RB set 1 in the order of the indices of the PRBs from low to high, i.e., 4 PRBs with indices of PRBs {35, 40, 45, 50}. The PSCCH is mapped to the 9 PRBs in the order of the indices of the PRBs from low to high. Therefore, the order of the frequency domain resources to which the PSCCH is mapped is {4, 9, 14, 19, 24, 35, 40, 45, 50}, whcich are indices of PRBs of the 9 PRBs.

In a case, the PSCCH may only be mapped to PRBs corresponding to IRBs in one RB set, and may not be mapped to PRBs in the guard band. Optionally, the frequency domain resources of the PSCCH are located in one RB set.

Examples 2 to 6: as shown in FIG. 21B, a resource pool includes two RB sets, and interlaced resources in the two RB sets are indexed sequentially. Therefore, the resource pool includes a total of 10 interlaced resources. The interlacements included in RB set 0 are 0 to 4, and the interlacements included in RB set 1 are 5 to 9. The mapping relationship between the PRBs in the guard band and IRBs may refer to FIG. 17. One sub-channel includes two IRBs. For example, sub-channel 0 corresponds to IRB #0 and IRB #1 in the RB set 0, sub-channel 1 corresponds to IRB #2 and IRB #3 in the RB set 0, sub-channel 2 corresponds to IRB #4 in the RB set 0 and IRB #5 in the RB set 1, and so on. The frequency domain resources of one PSCCH correspond to one sub-channel, that is, correspond to two IRBs. The PSCCH is mapped to PRBs corresponding to the two IRBs, but may not be mapped to the PRBs in the guard band. In the example, the PSCCH is mapped to all PRBs corresponding to IRBs included in its frequency domain resources, that is, P=Q. The PSCCH corresponding to sub-channel 0, whose frequency domain resources include IRB #0 and IRB #1 in RB set 0, may be mapped to PRBs corresponding to IRB #0 and IRB #1 (corresponding PRBs with indices of PRB or indices of CRB {5, 6, 10, 11, 15, 16, 20, 21, 25}), as shown in the boxes in which indices of IRBs are 0 and 1 in the RB set 0 in FIG. 21B. However, the PSCCH is not mapped to the PRB corresponding to IRB 0 of the RB set 0 and the PRB corresponding to IRB 1 (i.e., CRB #26) in the guard band. The PSCCH corresponding to sub-channel 2, whose frequency domain resources include IRB #4 in the RB set 0 and IRB #5 in the RB set 1, may be mapped to PRBs corresponding to IRB #4 and IRB #5 (corresponding PRBs with indices of PRB or indices of CRB {4, 9, 14, 19, 24, 35, 40, 45, 50, 55}), as shown in the boxes in which index of IRB is 4 in the RB set 0 and the boxes in which index of IRB is 5 in the RB set 1 in FIG. 21B. However, the PSCCH is not mapped to the PRB corresponding to IRB #4 of the RB set 0 (i.e., CRB #29) and the PRB corresponding to IRB #5 of the RB set 1 (i.e., CRB #30) in the guard band.

In another case, in a case where a plurality of IRBs included in the sub-channel corresponding to the PSCCH correspond to multiple RB sets or the frequency domain resources of the PSCCH are located in multiple RB sets, the PSCCH may be mapped to PRBs in the guard band.

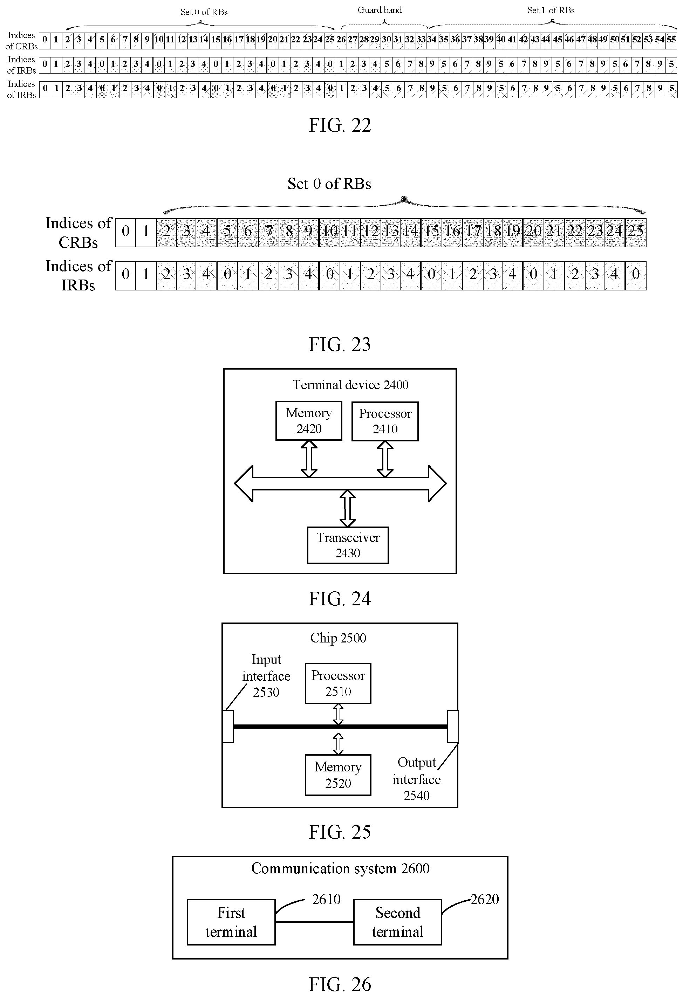

Examples 2 to 7, as shown in FIG. 22, a resource pool includes two RB sets, and the interlaced resources in the two RB sets are indexed sequentially. Therefore, the resource pool includes a total of 10 interlaced resources. Interlacements included in RB set 0 are 0 to 4, and interlacements included in RB set 1 are 5 to 9. The mapping relationship between PRBs in the guard band and IRBs may refer to FIG. 17. One sub-channel includes two IRBs. For example, sub-channel 0 corresponds to IRB #0 and IRB #1 in RB set 0, sub-channel 1 corresponds to IRB #2 and IRB #3 in the RB set 0, sub-channel 2 corresponds to IRB #4 in the RB set 0 and IRB #5 in the RB set 1, and so on. The frequency domain resources of one PSCCH correspond to one sub-channel, that is, correspond to two IRBs. The PSCCH corresponding to sub-channel 0, whose frequency domain resources include the PRBs corresponding to IRB #0 and IRB #1 in the RB set 0 (corresponding PRBs with indices of PRB or indices of CRB {5, 6, 10, 11, 15, 16, 20, 21, 25}), as shown in the boxes in which indices of IRBs are 0 and 1 in the RB set 0 in FIG. 22. However, the PSCCH is not mapped to the PRB corresponding to IRB #1 in the guard band (i.e., CRB #26). The PSCCH corresponding to sub-channel 2, whose frequency domain resources include the PRBs corresponding to IRB #4 in RB set 0 and IRB #5 in RB set 1 (PRBs whose corresponding indices of the PRB or indices of the CRB are {4, 9, 14, 19, 24, 29, 30, 35, 40, 45, 50, 55}), as shown in the box whose index of IRB is 4 in RB set 0 and the box whose index of IRB is 5 in RB set 1 in FIG. 22. Since the frequency domain resources of the PSCCH are located in two RB sets, the PRBs in the guard band between the two RB sets may be mapped to the PSCCH. The PSCCH is also mapped to the PRB corresponding to IRB #4 of RB set 0 (i.e., CRB #29) and the PRB corresponding to IRB #5 of RB set 1 (i.e., CRB #30) in the guard band.

(2) For PSSCH:

In a case, if the frequency domain resources of the PSSCH include resources in one RB set, the PSSCH is not mapped to the PRBs included in the guard band.

Example 2-8: resource mapping for a PSSCH whose frequency domain resources are located in one RBset is shown in FIG. 19. One sub-channel includes one IRB, sub-channel 0 corresponds to IRB #0, sub-channel 1 corresponds to IRB #1, and so on. The PSSCH corresponding to sub-channel 0, whose frequency domain resources include the PRBs corresponding to IRB #0 in RB set 0, as shown in the five boxes whose indices of IRBs are 0 in RB set 0 in FIG. 19, while the PSSCH is not mapped to the PRB corresponding to IRB #0 (i.e., CRB #30) in the guard band.

In another case, if the frequency domain resources of the PSSCH include resources in multiple RB sets, the PSSCH may not be mapped to the PRBs included in the guard band.

Example 2-9: as shown in FIG. 21B, a resource pool includes two RB sets, and the interlaced resources in the two RB sets are indexed sequentially. Therefore, the resource pool includes a total of 10 interlaced resources, among which the interlacements included in RB set 0 are 0 to 4, and the interlaces included in RB set 1 are 5 to 9. One sub-channel includes two IRBs, for example, sub-channel 0 corresponds to IRB #0 and IRB #1 in RB set 0, sub-channel 1 corresponds to IRB #2 and IRB #3 in RB set 0, sub-channel 2 corresponds to IRB #4 in RB set 0 and IRB #5 in RB set 1, and so on. The frequency domain resources of one PSSCH correspond to one sub-channel, that is, correspond to two IRBs. The PSSCH corresponding to sub-channel 0, whose frequency domain resources include the PRBs corresponding to IRB #0 and IRB #1 in RB set 0 (PRBs whose corresponding indices of the PRB or indices of the CRB are {5, 6, 10, 11, 15, 16, 20, 21, 25}). However, the PSSCH is not mapped to the PRB corresponding to IRB #0 of RB set 0 and the PRB corresponding to IRB #1 of RB set 0 (i.e., CRB #26) in the guard band. The PSSCH corresponding to sub-channel 2, whose frequency domain resources include the PRBs corresponding to IRB #4 in RB set 0 and IRB #5 in RB set 1 (PRBs whose corresponding indices of the PRB or indices of the CRB are {4, 9, 14, 19, 24, 29, 30, 35, 40, 45, 50, 55}). However, the PSSCH is not mapped to the PRB corresponding to IRB #4 of RB set 0 (i.e., CRB #29) and the PRB corresponding to IRB #5 of RB set 1 (i.e., CRB #30) in the guard band.

In another case, if the frequency domain resources of the PSSCH include resources in multiple RB sets, the PSSCH may be mapped to the PRBs included in the guard band.

Example 2-10: as shown in FIG. 22, a resource pool includes two RB sets, and the interlaced resources in the two RB sets are indexed sequentially. Therefore, the resource pool includes a total of 10 interlaced resources, among which the interlacements included in RB set 0 are 0 to 4, and the interlacements included in RB set 1 are 5 to 9. One sub-channel includes two IRBs, for example, sub-channel 0 corresponds to IRB #0 and IRB #1 in RB set 0, sub-channel 1 corresponds to IRB #2 and IRB #3 in RB set 0, sub-channel 2 corresponds to IRB #4 in RB set 0 and IRB #5 in RB set 1, and so on. The frequency domain resources of one PSSCH correspond to one sub-channel, that is, correspond to two IRBs. Frequency domain resources of the PSSCH corresponding to sub-channel 0 include the PRBs corresponding to IRB #0 and IRB #1 in RB set 0. However, the PSSCH is not mapped to the PRB corresponding to IRB #1 (i.e., CRB #26) in the guard band. Frequency domain resources of the PSSCH corresponding to sub-channel 2 include PRBs corresponding to IRB #4 in RB set 0 and IRB #5 in RB set 1. Since the frequency domain resources of the PSSCH are located in two RB sets, the PRBs in the guard band between the two RB sets may be mapped to the PSSCH. The PRBs corresponding to IRB #4 of RB set 0 (i.e., CRB #29) and the PRBs corresponding to IRB #5 of RB set 1 (i.e., CRB #30) in the guard band are also mapped to the PSSCH. Therefore, the PSCCH is mapped to PRBs whose indices of PRBs or indices of CRBs are {4, 9, 14, 19, 24, 29, 30, 35, 40, 45, 50, 55}.

(3) For PSFCH: PSFCH is not mapped to the PRBs in the guard band.

(4) For S-SSB: S-SSB is not mapped to the PRBs in the guard band.

Example 3: manner for determining the transmission block size of PSSCH

In a case of determining the transmission block size of the PSSCH, it is necessary to determine the transmission block size according to a number of PRBs corresponding to the frequency domain resources of the PSSCH. However, in one RB set, the number of PRBs corresponding to different IRBs may be different. As shown in FIG. 23, one RB set includes 24 PRBs (i.e., CRBs), and for a 30 kHz sub-carrier spacing, the RB sets includes 5 IRBs. As shown in FIG. 23, IRB #0, IRB #2, IRB #3, and IRB #4 correspond to 5 PRBs respectively, and IRB #1 corresponds to 4 PRBs.

In addition, for a resource pool including multiple RB sets, in a case where a guard band is configured, the number of PRBs corresponding to different IRBs may also be different. The mapping relationship between PRBs (i.e., CRBs) in the guard band and IRBs refers to FIG. 17. IRB #2, IRB #3, and IRB #4 in RB set 0 correspond to 6 PRBs respectively, and IRB #0 and IRB #1 in RB set 0 correspond to 5 PRBs respectively.

There may be a plurality of transmissions of a transmission block carried by the PSSCH channel. That is, the transmission reliability is improved via a plurality of retransmissions, and a plurality of PSSCH transmissions may correspond to different frequency domain resources. For example, the first PSSCH transmission occupies IRB #0, and the second PSSCH transmission occupies IRB #2. Since different IRBs may correspond to different numbers of PRBs, if the transmission block size is determined according to the actual number of PRBs occupied by the PSSCH of the transmission, the transmission block sizes corresponding to the PSSCHs of different transmissions may be different, so that the receiving terminal does not perform merge decoding.

Example 3-1: the number of PRBs $n_{PRB}$ corresponding to the PSSCH used in a case of calculating the transmission block size (TBS) (i.e., the first number of PRBs mentioned above) is determined according to all or part of the following parameters: $N_{sub\text{-}ch}$, $N_{IRB}^{sub-ch}$, $N_{PRB}$, $N_{IRB}$.

For example, the number of PRBs $n_{PRB}$ corresponding to the PSSCH used to calculate the transmission block size (TBS) is determined according to the following formula:

$$n_{PRB} = f(N_{sub-ch}, N_{IRB}^{sub-ch}, N_{PRB}, N_{IRB}) \qquad \text{(Formula 1)}$$

where,

$N_{sub\text{-}ch}$ indicates a number of sub-channels corresponding to the frequency domain resources of PSSCH. $N_{IRB}^{sub-ch}$ indicates a number of IRBs corresponding to one sub-channel.

$N_{PRB}$ may have at least one of the following meanings:

(1) indicating a number of PRBs included in one RB set. Optionally, the number of PRBs included in the RB sets does not include PRBs in the guard band.

(2) indicating a number of PRBs corresponding to the frequency domain resources of the resource pool. Optionally, in a case where the resource pool includes multiple RB sets, the number of PRBs indicated by the parameter may include or not include the corresponding PRBs in the guard band.

$N_{IRB}$ may have at least one of the following meanings.

*(1)* $N_{IRB}$ indicates the number of IRBs included in one RB set.

For example, for a sub-carrier spacing of 15 kHz, the number of IRBs included in one RB set is 10, and for a sub-carrier spacing of 30 kHz, the number of IRBs included in one RB set is 5.

*(2)* $N_{IRB}$ indicates a number of IRBs corresponding to the sidelink system.

For example, for a sub-carrier spacing of 15 kHz, the number of IRBs corresponding to the sidelink system is 10, and for a sub-carrier spacing of 30 kHz, the number of IRBs corresponding to the sidelink system is 5.

*(3)* $N_{IRB}$ indicates a number of IRBs corresponding to all sub-channels included in the resource pool.
For example, a resource pool includes 5 sub-channels, each sub-channel corresponds to 2 IRBs, then the number of IRBs corresponding to all sub-channels included in the resource pool is 10, that is, $N_{IRB}$ = 10.
*(4)* $N_{IRB}$ indicates a sum of a number of IRBs included in each RB set included in the resource pool.
For example, the resource pool includes 2 RB sets, each RB set includes 5 IRBs, then the sum of the number of IRBs included in each RB set included in the resource pool is 10, that is, $N_{IRB}$ = 10.

For example, the resource pool includes one RB set, the RB set includes 24 PRBs (not including PRBs in the guard band). The sidelink sub-carrier spacing is 30 kHz, and one RB set includes 5 IRBs. One sub-channel corresponds to 2 IRBs. In a case where one PSSCH occupies 2 sub-channels, the number of PRBs $n_{PRB}$ corresponding to the PSSCH used to calculate the transmission block size is shown in the following formula 2 or formula 3:

$$n_{PRB} = 2 \times 2 \times ceil(24/5) \qquad \text{(Formula 2)}$$

$$n_{PRB} = ceil(2 \times 2 \times 24/5) \qquad \text{(Formula 3)}$$

In Formula 2 and Formula 3, the first value "2" on the right side of the formula indicates the value of $N_{sub\text{-}ch}$, the second value "2" indicates the value of $N_{IRB}^{sub-ch}$, the value "24" indicates the value of $N_{PRB}$, and the value "5" indicates the value of $N_{IRB}$.
In addition, ceil() indicates a rounding-up operation. In a specific implementation, ceil() may be replaced by floor() or round(), where the round() function indicates a rounding operation that rounds up to the nearest integer and floor() indicates a rounding down operation.
For another example, the resource pool includes 2 RB sets, and the resource pool includes 54 PRBs (including PRBs in the guard band), as shown in FIG. 17, the sidelink sub-carrier spacing size is 30 kHz, and the number of IRBs included in the resource pool is 10; one sub-channel corresponds to 2 IRBs, and in a case where one PSSCH occupies 3 sub-channels, illustratively, the number of PRBs $n_{PRB}$ corresponding to the PSSCH used in a case of calculating the transmission block size using Formula 2 is as shown in the following formula:

$$n_{PRB} = 3 \times 2 \times ceil(54/10)$$

In the embodiments of the present application, by determining the mapping relationship between the RB sets and the PRBs in the guard band, and determining the mapping relationship between the PRBs in the guard band and the IRBs, the PRBs in the guard band may be used for sidelink transmission, which improves transmission efficiency. In addition, the TBS is determined according to the correspondence relationship between the total number of PRBs and the number of IRBs in the resource pool, so that the TBS will not be different due to the use of different IRB resources each time the PSSCH is transmitted.
FIG. 24 is a schematic structural diagram of a terminal device 2400 according to the embodiments of the present application. The terminal device 2400 includes a processor 2410, which may call and run a computer program from a memory to cause the terminal device 2400 to implement the method in the embodiments of the present application.
In an implementation, the terminal device 2400 may further include a memory 2420. The processor 2410 may call and run a computer program from the memory 2420 to cause the terminal device 2400 to implement the methods in the embodiments of the present application.
The memory 2420 may be a separate device independent from the processor 2410, or may be integrated into the processor 2410.
In an implementation, the terminal device 2400 may further include a transceiver 2430, and the processor 2410 may control the transceiver 2430 to communicate with other devices, and specifically, to transmit information or data to other devices, or receive information or data transmitted by other devices.
The transceiver 2430 may include a transmitter and a receiver. The transceiver 2430 may further include antenna(s), and the number of antenna(s) may be one or more.
In an implementation, the terminal device 2400 may be the terminal in the embodiments of the present application, and the terminal device 2400 may implement the corresponding procedure implemented by the terminal in the various methods of the embodiments of the present application, which will not be repeated here for brevity.
FIG. 25 is a schematic structural diagram of a chip 2500 according to the embodiments of the present application. The chip 2500 includes a processor 2510, and the processor 2510 may call a computer program from a memory and run the computer program, to implement the method in the embodiments of the present application.
In an implementation, the chip 2500 may further include a memory 2520. The processor 2510 may call and run a computer program from the memory 2520, to implement the methods performed by a terminal device in the embodiments of the present application.

The memory 2520 may be a separate device independent from the processor 2510, or may be integrated into the processor 2510.

In an implementation, the chip 2500 may further include an input interface 2530. The processor 2510 may control the input interface 2530 to communicate with other devices or chips, and specifically, the input interface 2530 may obtain information or data transmitted by other devices or chips.

In an implementation, the chip 2500 may further include an output interface 2540. The processor 2510 may control the output interface 2540 to communicate with other devices or chips, and specifically, the output interface 2540 may output information or data to other devices or chips.

In an implementation, the chip may be applied to the terminal in the embodiments of the present application, and the chip may implement the corresponding procedure implemented by the terminal device in the various methods of the embodiments of the present application, which will not be repeated here for brevity.

The chips applied in the terminal device may be the same chip or different chips.

It should be understood that the chip mentioned in the embodiments of the present application may also be called a system on chip, a system chip, a chip system or a system-on-chip chip, etc.

The processor may be a general-purpose processor, a digital signal processor (DSP), a field programmable gate array (FPGA), an application specific integrated circuit (ASIC) or other programmable logic devices, transistor logic devices, discrete hardware components, etc. The general purpose processor mentioned above may be a microprocessor or any conventional processor.

The memory may be a volatile memory or a non-volatile memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM).

It should be understood that the memory is exemplary but not limiting illustration, e.g., the memory in embodiments of the present application may also be a static random access memory (static RAM, SRAM), a dynamic random access memory (dynamic RAM, DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). That is, the memory in the embodiments of the present application is intended to include, but not limited to, these and any other suitable types of memories.

FIG. 26 is a schematic block diagram of a communication system 2600 according to the embodiments of the present application. The communication system 2600 includes a first terminal 2610 and a second terminal 2620.

A first terminal 2610, used to perform the method performed by the transmitting terminal in any of the above method embodiments;

A second terminal 2620, used to perform the method performed by the receiving terminal in any of the above method embodiments;

The above embodiments may be implemented in whole or in part through software, hardware, firmware, or any interlaceination thereof. When implemented by using a software program, the embodiments may be implemented in a form of a computer program product in whole or in part. The computer program product includes one or more computer instructions. When the computer program instruction(s) are loaded on and executed by a computer, processes or functions in accordance with the embodiments of the present application are generated in whole or in part. The computer may be a general-purpose computer, a dedicated computer, a computer network, or any other programmable device. The computer instruction(s) may be stored in a computer-readable storage medium or transmitted from a computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, radio or microwave). The computer-readable storage medium may be any available medium able to be accessed by the computer, or may be a data storage device, such as a server or data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It should be understood that in the various embodiments of the present application, the magnitude of the serial numbers of the above-mentioned processes does not mean the order of execution. The execution order of each process should be determined by its function and internal logic, and should not constitute any limitation on the implementation process of the embodiments of the present application.

Those skilled in the art may clearly understand that, for the convenience and brevity of description, the specific working processes of the systems, devices and units described above may refer to the corresponding processes in the aforementioned method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. A sidelink transmission method, comprising:
obtaining, by a terminal, a mapping relationship between resource block (RB) sets and physical resource blocks (PRBs) in a guard band.

2. The method according to claim 1, wherein the guard band exists between a first RB set and a second RB set.

3. The method according to claim 2, wherein the guard band comprises A PRBs, X PRBs in the guard band belong to the first RB set, and Y PRBs in the guard band belong to the second RB set, wherein
X is greater than or equal to 0 and is less than or equal to A, Y is greater than or equal to 0 and is less than or equal to A, and X, Y and A are positive integers.

4. The method according to claim 3, wherein a sum of X and Y is equal to A.

5. The method according to claim 3 or 4, wherein X and/or Y are determined according to configuration information, and the configuration information can be comprised in resource pool configuration information or sidelink bandwidth part (SL BWP) configuration information.

6. The method according to claim 5, wherein the configuration information is pre-configuration information or network configuration information.

7. The method according to any one of claims 2 to 6, wherein X PRBs in the guard band that belong to the first RB set comprise X PRBs in the guard band that are in an order of indices of the PRBs from low to high.

8. The method according to any one of claims 2 to 6, wherein Y PRBs in the guard band that belong to the second RB set comprise Y PRBs in the guard band that are in an order of indices of the PRBs from high to low.

9. The method according to any one of claims 2 to 6, wherein X PRBs in the guard band that belong to the first RB set comprise X PRBs in the guard band that correspond to interlaced resource blocks (IRBs) that are in an order of indices of IRBs from low to high.

10. The method according to claim 9, wherein the X PRBs in the guard band that belong to the first RB set are determined in the order of the indices of the IRBs from low to high and then an order of indices of the PRBs from low to high.

11. The method according to any one of claims 2 to 6, wherein Y PRBs in the guard band that belong to the second RB set comprise Y PRBs in the guard band that are comprised in IRBs that are in an order of indices of IRBs from high to low.

12. The method according to claim 11, wherein the Y PRBs in the guard band that belong to the second RB set are determined in the order of the indices of the IRBs from high to low and then an order of indices of PRBs from high to low.

13. The method according to any one of claims 1 to 12, wherein indices of PRBs in the guard band have a correspondence with indices of IRBs.

14. A sidelink transmission method, comprising:
obtaining, by a terminal, a mapping relationship between frequency domain resources of a sidelink channel and sidelink transmission resources, wherein the frequency domain resources of the sidelink channel comprise one or more interlaced resource blocks (IRBs).

**15.** The method according to claim 14, wherein in a case where the frequency domain resources of the sidelink channel are not located in multiple resource block (RB) sets, physical resource blocks (PRBs) corresponding to the frequency domain resources of the sidelink channel are located in one RB set, wherein the PRBs corresponding to the frequency domain resources of the sidelink channel are comprised in PRBs corresponding to the one or more IRBs comprised in the frequency domain resources of the sidelink channel.

**16.** The method according to claim 14, wherein in a case where the frequency domain resources of the sidelink channel are located in multiple resource block (RB) sets, physical resource blocks (PRBs) corresponding to the frequency domain resources of the sidelink channel are located in the multiple RB sets, wherein the PRBs corresponding to the frequency domain resources of the sidelink channel are comprised in PRBs corresponding to the one or more IRBs comprised in the frequency domain resources of the sidelink channel.

**17.** The method according to claim 16, wherein the PRBs corresponding to the frequency domain resources of the sidelink channel comprise a PRB in a guard band.

**18.** The method according to claim 16, wherein the PRBs corresponding to the frequency domain resources of the sidelink channel do not comprise a PRB in a guard band.

**19.** The method according to any one of claims 14 to 18, wherein the sidelink channel comprises at least one of: a physical sidelink control channel (PSCCH) or a physical sidelink shared channel (PSSCH).

**20.** The method according to any one of claims 14 to 18, wherein the sidelink channel is a physical sidelink feedback channel (PSFCH), and the PSFCH is not mapped to a PRB in a guard band.

**21.** The method according to claim 20, wherein frequency domain resources of the PSFCH are located in one RB set.

**22.** The method according to any one of claims 14 to 18, wherein the sidelink channel is a sidelink synchronization signal block (S-SSB), and the S-SSB is not mapped to a PRB in a guard band.

**23.** The method according to claim 22, wherein frequency domain resources of the S-SSB are located in one RB set.

**24.** The method according to any one of claims 14 to 23, wherein a size of the frequency domain resources of the sidelink channel is P PRBs, IRBs corresponding to the frequency domain resources of the sidelink channel comprise Q PRBs, and a mapping manner between the frequency domain resources of the sidelink channel and the sidelink transmission resources comprises one of:

mapping in a first order of indices of IRBs and then a second order of indices of PRBs corresponding to one IRB, until a number of PRBs to which the sidelink channel is mapped is P; or
determining P PRBs in the first order of the indices of the IRBs and then the second order of the indices of the PRBs corresponding to one IRB, and mapping the sidelink channel to the P PRBs in a third order of the indices of the PRBs; or
mapping in a first order of indices of RB sets, a second order of the indices of the IRBs and then a third order of the indices of the PRBs corresponding to one IRB, until the number of PRBs to which the sidelink channel is mapped is P; or
determining P PRBs in the first order of the indices of RB sets, the second order of the indices of the IRBs and then the third order of the indices of the PRBs corresponding to one IRB, and mapping the sidelink channel to the P PRBs in a fourth order of the indices of the PRBs, wherein
P is less than or equal to Q, and P and Q are positive integers, the indices of the RB sets are indices corresponding to RB sets where the frequency domain resources of the sidelink channel are located, and the indices of the IRBs are indices of the one or more IRBs comprised in the frequency domain resources of the sidelink channel.

**25.** A sidelink transmission method, comprising:
obtaining, by a terminal, a transmission block size (TBS) of a sidelink channel, wherein the TBS is determined according to a first number of PRBs and/or a second number of PRBs.

**26.** The method of claim 25, wherein the first number of PRBs and/or the second number of PRBs are determined based on at least one of the following parameters:

a number of sub-channels corresponding to frequency domain resources of the sidelink channel;
a number of IRBs corresponding to one sub-channel;
a number of PRBs comprised in one resource block (RB) set;
a number of PRBs corresponding to frequency domain resources of a resource pool;
a number of IRBs comprised in one RB set;
a number of IRBs corresponding to a sidelink system;
a number of IRBs corresponding to all sub-channels comprised in the resource pool; or
a sum of a number of IRBs comprised in each RB set comprised in the resource pool.

**27.** The method according to claim 26, wherein the number of PRBs comprised in the one RB set comprises a number of all or a portion of PRBs in a guard band, or does not comprise the number of the PRBs in the guard band.

**28.** The method according to claim 26 or 27, wherein in a RB set, different IRBs correspond to a same or different number of PRBs.

**29.** The method according to any one of claims 26 to 28, wherein in a case where the resource pool comprises multiple RB sets, the number of PRBs corresponding to the frequency domain resources of the resource pool comprises corresponding PRBs in a guard band, or does not comprise the corresponding PRBs in the guard band.

**30.** The method according to any one of claims 26 to 29, wherein the first number of PRBs is determined based on the number of sub-channels corresponding to the frequency domain resources of the sidelink channel, the number of IRBs corresponding to one sub-channel, and a first value.

**31.** The method according to claim 30, wherein the first value is determined according to a third number of PRBs and a first number of IRBs, wherein

the third number of PRBs comprises at least one of: the number of PRBs comprised in one RB set; or the number of PRBs corresponding to the frequency domain resources of the resource pool; and
the first number of IRBs comprises at least one of: the number of IRBs comprised in one RB set; the number of IRBs corresponding to the sidelink system; the number of IRBs corresponding to all sub-channels comprised in the resource pool; or the sum of the number of IRBs comprised in each RB set comprised in the resource pool.

**32.** The method according to claim 31, wherein the first value is determined according to a ratio of the third number of PRBs to the first number of IRBs.

**33.** The method according to any one of claims 25 to 32, wherein the first number of PRBs is used to determine a number of PRBs or a number of sub-carriers of a PSSCH, and the second number of PRBs is used to determine a number of sub-carriers of a PSCCH.

**34.** A terminal, comprising:
a processing unit, used to obtain a mapping relationship between resource block (RB) sets and physical resource blocks (PRBs) in a guard band.

**35.** The terminal according to claim 34, wherein the guard band exists between a first RB set and a second RB set.

**36.** The terminal according to claim 35, wherein the guard band comprises A PRBs, X PRBs in the guard band belong to the first RB set, and Y PRBs in the guard band belong to the second RB set, wherein
X is greater than or equal to 0 and is less than or equal to A, Y is greater than or equal to 0 and is less than or equal to A, and X, Y and A are positive integers.

**37.** The terminal according to claim 36, wherein a sum of X and Y is equal to A.

**38.** The terminal according to claim 36 or 37, wherein X and/or Y are determined according to configuration information, and the configuration information can be comprised in resource pool configuration information or sidelink bandwidth part (SL BWP) configuration information.

**39.** The terminal according to claim 38, wherein the configuration information is pre-configuration information or network configuration information.

**40.** The terminal according to any one of claims 35 to 39, wherein X PRBs in the guard band that belong to the first RB set comprise X PRBs in the guard band that are in an order of indices of the PRBs from low to high.

**41.** The terminal according to any one of claims 35 to 39, wherein Y PRBs in the guard band that belong to the second RB set comprise Y PRBs in the guard band that are in an order of indices of the PRBs from high to low.

**42.** The terminal according to any one of claims 35 to 39, wherein X PRBs in the guard band that belong to the first RB set comprise X PRBs in the guard band that correspond to interlaced resource blocks (IRBs) that are in an order of indices of IRBs from low to high.

**43.** The terminal according to claim 42, wherein the X PRBs in the guard band that belong to the first RB set are determined in the order of the indices of the IRBs from low to high and then an order of indices of the PRBs from low to high.

**44.** The terminal according to any one of claims 35 to 39, wherein Y PRBs in the guard band that belong to the second RB set comprise Y PRBs in the guard band that are comprised in IRBs that are in an order of indices of IRBs from high to low.

**45.** The terminal according to claim 44, wherein the Y PRBs in the guard band that belong to the second RB set are determined in the order of the indices of the IRBs from high to low and then an order of indices of PRBs from high to low.

**46.** The terminal according to any one of claims 34 to 45, wherein indices of PRBs in the guard band have a correspondence with indices of IRBs.

**47.** A terminal, comprising:
a processing unit, used to obtain a mapping relationship between frequency domain resources of a sidelink channel and sidelink transmission resources, wherein the frequency domain resources of the sidelink channel comprise one or more IRBs.

**48.** The terminal according to claim 47, wherein in a case where the frequency domain resources of the sidelink channel are not located in multiple RB sets, PRBs corresponding to the frequency domain resources of the sidelink channel are located in one RB set, wherein the PRBs corresponding to the frequency domain resources of the sidelink channel are comprised in PRBs corresponding to the one or more IRBs comprised in the frequency domain resources of the sidelink channel.

**49.** The terminal according to claim 47, wherein in a case where the frequency domain resources of the sidelink channel are located in multiple RB sets, PRBs corresponding to the frequency domain resources of the sidelink channel are located in the multiple RB sets, wherein the PRBs corresponding to the frequency domain resources of the sidelink channel are comprised in PRBs corresponding to the one or more IRBs comprised in the frequency domain resources of the sidelink channel.

**50.** The terminal according to claim 49, wherein the PRBs corresponding to the frequency domain resources of the sidelink channel comprise a PRB in a guard band.

**51.** The terminal according to claim 49, wherein the PRBs corresponding to the frequency domain resources of the sidelink channel do not comprise a PRB in a guard band.

**52.** The terminal according to any one of claims 47 to 51, wherein the sidelink channel comprises at least one of: a PSCCH or a PSSCH.

**53.** The terminal according to any one of claims 47 to 51, wherein the sidelink channel is a PSFCH, and the PSFCH is not mapped to a PRB in a guard band.

**54.** The terminal according to claim 53, wherein frequency domain resources of the PSFCH are located in one RB set.

**55.** The terminal according to any one of claims 47 to 51, wherein the sidelink channel is an S-SSB, and the S-SSB is not mapped to a PRB in a guard band.

**56.** The terminal according to claim 55, wherein frequency domain resources of the S-SSB are located in one RB set.

**57.** The terminal according to any one of claims 47 to 56, wherein a size of the frequency domain resources of the sidelink channel is P PRBs, IRBs corresponding to the frequency domain resources of the sidelink channel comprise Q PRBs, and a mapping manner between the frequency domain resources of the sidelink channel and the sidelink transmission resources comprises one of:

mapping in a first order of indices of IRBs and then a second order of indices of PRBs corresponding to one IRB, until a number of PRBs to which the sidelink channel is mapped is P; or
determining P PRBs in the first order of the indices of the IRBs and then the second order of the indices of the PRBs corresponding to one IRB, and mapping the sidelink channel to the P PRBs in a third order of the indices of the PRBs; or
mapping in a first order of indices of RB sets, a second order of the indices of the IRBs and then a third order of the indices of the PRBs corresponding to one IRB, until the number of PRBs to which the sidelink channel is mapped is P; or
determining P PRBs in the first order of the indices of the RB sets, the second order of the indices of the IRBs and then the third order of the indices of the PRBs corresponding to one IRB, and mapping the sidelink channel to the P PRBs in a fourth order of the indices of the PRBs, wherein
P is less than or equal to Q, and P and Q are positive integers, the indices of the RB sets are indices corresponding to RB sets where the frequency domain resources of the sidelink channel are located, and the indices of the IRBs is indices of the one or more IRBs comprised in the frequency domain resources of the sidelink channel.

**58.** A terminal, comprising:
a processing unit, used to obtain a transmission block size (TBS) of a sidelink channel, wherein the TBS is determined according to a first number of PRBs and/or a second number of PRBs.

**59.** The terminal according to claim 58, wherein the first number of PRBs and/or the second number of PRBs are determined based on at least one of the following parameters:

a number of sub-channels corresponding to frequency domain resources of the sidelink channel;
a number of IRBs corresponding to one sub-channel;
a number of PRBs comprised in one RB set;
a number of PRBs corresponding to frequency domain resources of a resource pool;
a number of IRBs comprised in one RB set;
a number of IRBs corresponding to a sidelink system;
a number of IRBs corresponding to all sub-channels comprised in the resource pool; or
a sum of a number of IRBs comprised in each RB set comprised in the resource pool.

**60.** The terminal according to claim 59, wherein the number of PRBs comprised in the one RB set comprises a number of all or a portion of PRBs in a guard band, or does not comprise the number of the PRBs in the guard band.

**61.** The terminal according to claim 59 or 60, wherein in a RB set, different IRBs correspond to a same or different number of PRBs.

**62.** The terminal according to any one of claims 59 to 61, wherein in a case where the resource pool comprises multiple RB sets, the number of PRBs corresponding to the frequency domain resources of the resource pool comprises corresponding PRBs in a guard band, or does not comprise the corresponding PRBs in the guard band.

**63.** The terminal according to any one of claims 59 to 62, wherein the first number of PRBs is determined based on the number of sub-channels corresponding to the frequency domain resources of the sidelink channel, the number of IRBs corresponding to one sub-channel, and a first value.

**64.** The terminal according to claim 63, wherein the first value is determined according to a third number of PRBs and a first number of IRBs, wherein

the third number of PRBs comprises at least one of: the number of PRBs comprised in the one RB set; or the number of PRBs corresponding to the frequency domain resources of the resource pool; and
the first number of IRBs comprises at least one of: the number of IRBs comprised in the one RB set; the number of IRBs corresponding to the sidelink system; the number of IRBs corresponding to all sub-channels comprised in the resource pool; or the sum of the number of IRBs comprised in each RB set comprised in the resource pool.

**65.** The terminal according to claim 64, wherein the first value is determined according to a ratio of the third number of PRBs to the first number of IRBs.

**66.** The terminal according to any one of claims 58 to 65, wherein the first number of PRBs is used to determine a number of PRBs or a number of sub-carriers of a PSSCH, and the second number of PRBs is used to determine a number of sub-carriers of a PSCCH.

**67.** A terminal, comprising a processor and a memory, wherein the memory is used to store a computer program, and the processor is used to call and run the computer program stored in the memory to cause the terminal to perform the method according to any one of claims 1 to 13, 14 to 24 or 25 to 33.

**68.** A chip, comprising a processor, wherein the processor is used to call and run a computer program from a memory to cause a device on which the chip is mounted to perform the method according to any one of claims 1 to 13, 14 to 24 or 25 to 33.

**69.** A computer-readable storage medium, configured to store a computer program, wherein the computer program, when run by a device, causes the device to perform the method according to any one of claims 1 to 13, 14 to 24 or 25 to 33.

**70.** A computer program product, comprising computer program instructions, wherein the computer program instructions cause a computer to perform the method according to any one of claims 1 to 13, 14 to 24 or 25 to 33.

**71.** A computer program, wherein the computer program causes a computer to perform the method according to any one of claims 1 to 13, 14 to 24 or 25 to 33.

Base station
Sidelink
communication

FIG. 1

Base station
Sidelink
communication

FIG. 2

Sidelink
communication

FIG. 3

UE1
Resource
allocation
Resource
allocation
UE2
UE3
Sidelink
communication

FIG. 4

UE1
Data
UE2

FIG. 5

Group
UE2
UE1
UE3
UE4

FIG. 6

UE2
UE6
UE3
UE1
UE5
UE4

FIG. 7

AGC
PSSCH
GP
PSCCH

FIG. 8A

AGC PSCCH PSSCH GP AGC PSFCH GP

FIG. 8B

AGC PSCCH PSSCH GP PSFCH GP

FIG. 8C

| Indices of RBs | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 |
|---|---|---|---|---|---|---|---|---|---|---|---|---|---|---|---|---|---|---|---|---|---|---|---|---|---|---|---|---|---|---|
| Indices of IRBs | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 | 4 |

FIG. 9

Starting ponit of the guard band 0
Starting point of the guard band 1
Starting point of the guard band 2
Resource block
Set 0 of resource blocks
Set 1 of resource blocks
Set 2 of resource blocks
Set 3 of resource blocks
Common resource benchmark
Length of guard band 0
Length of guard band 1
Length of guard band 2
Starting point of the sidelink BWP
Ending point of the sidelink BWP
Starting point of the resource pool
Ending point of the resource pool
Frequency domain

FIG. 10A

set 0 of RBs
Guard band
set 1 of RBs
Indices of CRBs
0 1 2 3 4 5 6 7 8 9 10 11 12 13 14 15 16 17 18 19 20 21 22 23 24 25 26 27 28 29 30 31 32 33 34 35 36 37 38 39 40 41 42 43 44 45 46 47 48 49 50 51 52 53 54 55
Indices of IRBs
0 1 2 3 4 0 1 2 3 4 0 1 2 3 4 0 1 2 3 4 0 1 2 3 4 0 1 2 3 4 0 1 2 3 4 0 1 2 3 4 0 1 2 3 4 0 1 2 3 4 0 1 2 3 4 0
1100
A terminal obtains a mapping relationship between sets of resource blocks (RBs) and physical resource blocks (PRBs) in a guard band.
S1110

FIG. 10B

FIG. 11

1200

A terminal obtains a mapping relationship between frequency domain resources of a sidelink channel and sidelink transmission resources, the frequency domain resources of the sidelink channel includIng one or more IRBs.

S1210

FIG. 12

1300

A terminal obtains a transmission block size (TBS) of a sidelink channel, the TBS being determined according to a first number of PRBs.

S1310

FIG. 13

First terminal 1400
Processing unit 1410
Second terminal 1500
Processing unit 1510

FIG. 14

FIG. 15

Third terminal 1600
Processing unit 1610

FIG. 16

Set 0 of RBs
Guard band
Set 1 of RBs
Indices of CRBS
Indices of IRBs

FIG. 17

Set 0 of RBs
Guard band
Set 1 of RBs
Indices of CRBs
Indices of IRBs

FIG. 18

Set 0 of RBs
Guard band
Set 1 of RBs
Indices of CRBs
Indices of IRBs
Indices of IRBs

FIG. 19

Set 0 of RBs
Guard band
Set 1 of RBs
Indices of CRBs
Indices of IRBs
Indices of IRBs

FIG. 20

Set 0 of RBs
Guard band
Set 1 of RBs
Indices of CRBs
Indices of IRBs
Indices of IRBs

FIG. 21A

Set 0 of RBs
Guard band
Set 1 of RBs
Indices of CRBs
Indices of IRBs
Indices of IRBs

FIG. 21B

Set 0 of RBs
Guard band
Set 1 of RBs
Indices of CRBs
0 1 2 3 4 5 6 7 8 9 10 11 12 13 14 15 16 17 18 19 20 21 22 23 24 25 26 27 28 29 30 31 32 33 34 35 36 37 38 39 40 41 42 43 44 45 46 47 48 49 50 51 52 53 54 55
Indices of IRBs
0 1 2 3 4 0 1 2 3 4 0 1 2 3 4 0 1 2 3 4 0 1 2 3 4 0 1 2 3 4 5 6 7 8 9 5 6 7 8 9 5 6 7 8 9 5 6 7 8 9 5 6 7 8 9 5
Indices of IRBs
0 1 2 3 4 0 1 2 3 4 0 1 2 3 4 0 1 2 3 4 0 1 2 3 4 0 1 2 3 4 5 6 7 8 9 5 6 7 8 9 5 6 7 8 9 5 6 7 8 9 5 6 7 8 9 5

FIG. 22

Set 0 of RBs
Indices of CRBs
0 1 2 3 4 5 6 7 8 9 10 11 12 13 14 15 16 17 18 19 20 21 22 23 24 25
Indices of IRBs
0 1 2 3 4 0 1 2 3 4 0 1 2 3 4 0 1 2 3 4 0 1 2 3 4 0

FIG. 23

Terminal device 2400
Memory 2420
Processor 2410
Transceiver 2430

FIG. 24

Chip 2500
Input interface 2530
Processor 2510
Memory 2520
Output interface 2540

FIG. 25

Communication system 2600
2610
2620
First terminal
Second terminal

FIG. 26

**INTERNATIONAL SEARCH REPORT**

International application No.
**PCT/CN2022/109088**

**A. CLASSIFICATION OF SUBJECT MATTER**

H04W 72/00(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 侧行, 侧链路, 旁路, 副链路, 次链路, 资源块, 保护, 频带, 梳齿, 交织, 传输块, 尺寸, 大小, 数量, sidelink, SL, resource block, RB, PRB, guard band, GB, interlace, IRB, TBS, TB, size, number

**C. DOCUMENTS CONSIDERED TO BE RELEVANT**

| Category* | Citation of document, with indication, where appropriate, of the relevant passages | Relevant to claim No. |
|---|---|---|
| E | WO 2022218368 A1 (VIVO COMMUNICATION TECHNOLOGY CO., LTD.) 20 October 2022 (2022-10-20)<br>description, p. 2, line 5 to p. 42, line 11 | 14-16, 19, 47-49, 52, 67-71 |
| X | WO 2022073186 A1 (QUALCOMM INC. et al.) 14 April 2022 (2022-04-14)<br>description, paragraphs [0005]-[0172] | 1-13, 34-46, 67-71 |
| X | CN 114586390 A (BEIJING XIAOMI MOBILE SOFTWARE CO., LTD.) 03 June 2022 (2022-06-03)<br>description, paragraphs [0004]-[0287] | 14-24, 47-57, 67-71 |
| X | CN 111726871 A (ASUSTEK COMPUTER INC.) 29 September 2020 (2020-09-29)<br>description, paragraphs [0006]-[0454] | 25-33, 58-71 |
| A | CN 107733591 A (BEIJING XINWEI TELECOM TECHNOLOGY INC.) 23 February 2018 (2018-02-23)<br>entire document | 1-71 |

☐ Further documents are listed in the continuation of Box C.

☑ See patent family annex.

* Special categories of cited documents:

- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 November 2022** | **29 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/109088**

| Patent document cited in search report | Publication date (day/month/year) | Patent family member(s) | Publication date (day/month/year) |
|---|---|---|---|
| WO 2022218368 A1 | 20 October 2022 | None | |
| WO 2022073186 A1 | 14 April 2022 | None | |
| CN 114586390 A | 03 June 2022 | None | |
| CN 111726871 A | 29 September 2020 | EP 3713354 A1 | 23 September 2020 |
| | | KR 20200113168 A | 06 October 2020 |
| | | ES 2925067 T3 | 13 October 2022 |
| | | US 2020305127 A1 | 24 September 2020 |
| | | US 10834704 B2 | 10 November 2020 |
| | | EP 3713354 B1 | 11 May 2022 |
| | | KR 102402251 B1 | 26 May 2022 |
| CN 107733591 A | 23 February 2018 | None | |

Form PCT/ISA/210 (patent family annex) (January 2015)